(19) Europäisches Patentamt / European Patent Office / Office européen des brevets

(11) **EP 4 769 533 A1**

(12) **EUROPEAN PATENT APPLICATION**
published in accordance with Art. 153(4) EPC

(43) Date of publication:
**01.07.2026 Bulletin 2026/27**

(21) Application number: **25749209.0**

(22) Date of filing: **31.01.2025**

(51) International Patent Classification (IPC):
$H01M\ 4/134^{(2010.01)}$    $H01M\ 4/38^{(2006.01)}$
$H01M\ 4/62^{(2006.01)}$    $H01M\ 4/1395^{(2010.01)}$
$H01M\ 4/04^{(2006.01)}$    $H01M\ 4/587^{(2010.01)}$
$H01M\ 10/052^{(2010.01)}$    $H01M\ 4/02^{(2006.01)}$

(52) Cooperative Patent Classification (CPC):
H01M 4/02; H01M 4/04; H01M 4/134;
H01M 4/1395; H01M 4/36; H01M 4/38; H01M 4/48;
H01M 4/587; H01M 4/62; H01M 10/052;
H01M 10/0525; Y02E 60/10

(86) International application number:
**PCT/KR2025/001611**

(87) International publication number:
**WO 2025/165168 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2024 KR 20240015221**

(71) Applicant: **LG Energy Solution, Ltd.**
**Seoul 07335 (KR)**

(72) Inventors:
• **YOON, Kyung-Hwan**
  **Daejeon 34122 (KR)**
• **PARK, Joo-Ho**
  **Daejeon 34122 (KR)**
• **JANG, Seok-Hoon**
  **Daejeon 34122 (KR)**

• **JO, Yoo-Sang**
  **Daejeon 34122 (KR)**
• **KANG, Hyeon-Jeong**
  **Daejeon 34122 (KR)**
• **KIM, Yeon-Woo**
  **Daejeon 34122 (KR)**
• **KIM, Hak-Yoon**
  **Daejeon 34122 (KR)**
• **PARK, Moon-Soo**
  **Daejeon 34122 (KR)**
• **PANG, Jung-Hyun**
  **Daejeon 34122 (KR)**
• **YANG, Su-Hyun**
  **Daejeon 34122 (KR)**

(74) Representative: **Hoffmann Eitle**
**Patent- und Rechtsanwälte PartmbB**
**Arabellastraße 30**
**81925 München (DE)**

(54) **ANODE, METHOD FOR MANUFACTURING SAME, AND ELECTROCHEMICAL DEVICE COMPRISING SAME**

(57) There are provided a negative electrode including a current collector and a negative electrode active material layer located on at least one surface of the current collector, wherein the negative electrode active material layer includes granules including a silicon-based active material, a linear conductive material and a binder; and a fibrillated fluorine-containing binder connecting and holding the granules together, and an electrochemical device including the same.

FIG. 1

**Description**

TECHNICAL FIELD

The present disclosure relates to a negative electrode, a method for manufacturing the same and an electrochemical device including the same, and more particularly, to a negative electrode with improved cohesion between active materials in the electrode and enhanced dispersion of a conductive material, a method for manufacturing the same and an electrochemical device including the same.

This application is based on and claims priority from Korean Patent Application No. 10-2024-0015221 filed on January 31, 2024 in the Republic of Korea, the disclosure of which is incorporated herein by reference.

BACKGROUND

Due to the increasing use of fossil fuels, there is a growing demand for the use of alternative energy and clean energy, and in these circumstances, many studies are being made in the field of energy generation and storage using electrochemistry. Currently, a typical example of electrochemical devices using electrical and chemical energy is secondary batteries, and the range of application of secondary batteries is gradually expanding. One of the most common types of secondary batteries, lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to auxiliary power sources through grids.

A process of manufacturing lithium secondary batteries is largely classified into three steps including an electrode manufacturing process, an electrode assembly manufacturing process and a formation/activation process. The electrode manufacturing process is sub-classified into an electrode material mixing process, an electrode coating process, a drying process, a rolling process, a slitting process and a winding process.

Among them, the electrode material mixing process is a process of mixing the components for forming an electrode active layer in which electrochemical reaction actually occurs in the electrode, and specifically, mixing the essential element of the electrode, an electrode active material with an additive such as a conductive material, a filler, a binder for binding powders and adhering to a current collector, and a solvent for imparting viscosity and dispersing the powders to prepare a flowable slurry.

The electrode coating process of applying the slurry to the electrically conductive current collector, and the drying process for removing the solvent contained in the electrode mixture slurry are performed, and additionally the electrode is compressed to a predetermined thickness.

In the electrode manufacturing process, during the drying process for drying the solvent included in the slurry, the materials, especially the binder migrates to the electrode surface due to uneven shrinkage of the electrode or differences in evaporation rate of the solvent, resulting in uneven binder distribution in the thickness direction of the electrode layer, causing surface defects or edge defects of the electrode, or poor adhesion to the current collector.

To solve the problems of the wet electrode process involving the drying process for drying the solvent included in the slurry, many attempts have been made on technology development to manufacture dry negative electrodes for lithium-ion secondary batteries. One of the attempts is dry negative electrodes manufactured by mixing an active material with a binder such as polytetrafluoroethylene (PTFE) and feeding the mixture between calendering rolls.

In dry negative electrodes, as the polytetrafluoroethylene binder is used in a larger amount, irreversible loss-induced capacity decline occurs, so the polytetrafluoroethylene binder is used in a small amount (for example, 1 wt% or less) compared to the negative electrode active material in order to minimize the capacity loss. In particular, in the case where the negative electrode active material includes, for example, silicon that has low conductivity and shrinks and expands to a great extent during charging/discharging, when the electrode is manufactured using a dry mixing method to mix the polytetrafluoroethylene binder, an additional binder and the conductive material, the conductive material is poorly dispersed and a secondary battery including the negative electrode is prone to capacity fading during cycling. In this instance, when the conductive material includes linear conductive materials such as single-walled carbon nanotubes or multi-walled carbon nanotubes, the dry mixing method is more difficult to evenly disperse the conductive material.

DISCLOSURE

Technical Problem

The present disclosure is designed to solve the above-described problems and therefore the present disclosure is directed to providing a negative electrode in which active materials within the electrode stick together by cohesion, volume expansion of a silicon-based active material is prevented and a conductive material is evenly dispersed to form a uniform and stable conductive network in a negative electrode active material layer, a method for manufacturing the same and an electrochemical device including the same.

Technical Solution

To solve the above-described problem, according to an aspect of the present disclosure, there is provided a negative electrode of the following embodiment.

According to a first embodiment,

there is provided a negative electrode including a current collector and a negative electrode active material layer located on at least one surface of the current collector,

wherein the negative electrode active material layer includes granules including a silicon-based active material, a linear conductive material and a binder; and a fibrillated fluorine-containing binder connecting and holding the granules together.

According to a second embodiment, in the first embodiment,

the silicon-based active material may include silicon (Si), silicon oxide (SiOx, $0<x\leq2$), a Si/C composite, or two or more of them.

According to a third embodiment, in the first or second embodiment,

the linear conductive material may include single-walled carbon nanotubes (SWCNT), multi-walled carbon nanotubes (MWCNT), carbon nanofibers, or two or more of them.

According to a fourth embodiment, in any one of the first to third embodiments,

the binder may include at least one of a linear binder and a dot-type binder.

According to a fifth embodiment, in the fourth embodiment,

the binder may include the linear binder and the dot-type binder.

According to a sixth embodiment, in the fourth or fifth embodiment,

the linear binder may include an acrylate-based polymer, and the dot-type binder may include a diene-based polymer, a styrene-based polymer, or two or more of them.

According to a seventh embodiment, in any one of the first to sixth embodiments,

the granules may have a central portion including the silicon-based active material and the linear conductive material; and a surface portion located at all or part of an outside of the central portion, the surface portion including the binder binding the silicon-based active material and the linear conductive material.

According to an eighth embodiment, in the seventh embodiment,

the dot-type binder may be included in a larger amount (wt%) at the surface portion of the granules than the central portion based on a total weight 100 wt% of the silicon-based active material, the linear conductive material and the binder, and

the surface portion may be a region near a surface of the granules to a predetermined depth in a direction from the surface of the granules toward a center of the granules, and the central portion may be a region other than the surface portion.

According to a ninth embodiment, in any one of the first to eighth embodiments,

the granules may include 80 to 98 parts by weight of the silicon-based active material, 0.2 to 10 parts by weight of the linear conductive material, and 0.5 to 10 parts by weight of the binder.

According to a tenth embodiment, in any one of the first to ninth embodiments,

the granules may further include a carbon-based active material.

According to an eleventh embodiment, in any one of the first to tenth embodiments,

the fluorine-containing binder may include polytetrafluoroethylene (PTFE).

According to a twelfth embodiment, in any one of the first to eleventh embodiments,

the negative electrode active material layer may include 5 to 30 parts by weight of the fluorine-containing binder based on 100 parts by weight of the granules.

According to a thirteenth embodiment, in any one of the first to twelfth embodiments,

a primer layer may be present on all or part of the at least one surface of the current collector,

the primer layer may include a primer layer binder and a primer layer conductive material, and

a sum of amounts of the primer layer binder and the primer layer conductive material may be equal to or larger than 90 wt% of a total weight of the primer layer.

According to a fourteenth embodiment,

there is provided a method for manufacturing the negative electrode of any one of the first to thirteenth embodiments, including: preparing a mixture including the granules including the silicon-based active material, the linear conductive material and the dot-type binder; and the fluorine-containing binder;
kneading the mixture in a range between 70°C and 200°C and under a pressure equal to or higher than normal pressure to produce a mixture lump;
grinding the mixture lump to obtain a negative electrode mixture powder;
feeding the negative electrode mixture powder between a plurality of rolls to perform a calendaring process to form a negative electrode film; and
attaching the negative electrode film to at least one surface of the current collector.

According to a fifteenth embodiment, in the fourteenth embodiment,
the granules may be produced by:
mixing the silicon-based active material, the linear conductive material and the binder with a dispersion medium to prepare a slurry; and spray-drying the slurry.
According to a sixteenth embodiment,
there is provided an electrochemical device including the negative electrode of any one of the first to thirteenth embodiments.
According to a seventeenth embodiment, in the sixteenth embodiment,
the electrochemical device may be a secondary battery.

<u>Advantageous Effects</u>

According to an embodiment of the present disclosure, the electrode may be manufactured by the dry method using the prepared granules including the silicon-based active material, the linear conductive material and the binder (the binder for granules), and at the same time, using the fibrillatable fluorine-containing binder when forming the negative electrode layer, thereby creating a synergistic effect of the combination of their advantages.
First, the method using the granules forms the electrode layer in which the silicon-based active material and the linear conductive material are evenly bonded together, thereby contributing to ensuring the uniformity of the conductive network. The silicon-based active material has high capacity characteristics, but causes severe volume expansion during charging/discharging, making the electrode structure unstable. In an embodiment of the present disclosure, the granules including the linear conductive material are produced beforehand and the silicon-based active material and the linear conductive material are physically and chemically bonded together using the binder in the granules, thereby effectively reducing the volume expansion of the silicon-based active material. In addition, the linear conductive material is evenly dispersed within the granules to form conduction pathways on the surface of the silicon-based active material, thereby maintaining high electrical connectivity across the electrode, and optimizing movement pathways of lithium ions.
In addition, the fluorine-containing binder not only provides high chemical stability and electrochemical durability but also has a fibrillatable property, thereby forming a microfibril structure and achieving even distribution in the electrode layer during the dry mixing process. Accordingly, the fibrillated fluorine-containing binder may form a more flexible network in the negative electrode active material layer, to evenly hold the silicon-based active material and the linear conductive material together, thereby improving the mechanical stability of the electrode layer during charging/discharging. In particular, the fibrillated binder may flexibly accommodate the repeated contraction and expansion of the silicon-based active material during charging/discharging, thereby suppressing structural collapse of the electrode, and significantly improving the long-term cycling characteristics.
As a result, in the present disclosure, a uniform conductive network may be formed using the granules including the silicon-based active material and the linear conductive material, and a flexible bonding structure may be formed in the electrode through the fibrillatable fluorine-containing binder. A combination of the two elements may create a synergistic effect that surpasses the individual advantages. Accordingly, the resistance of the electrode may be maintained at or above a predetermined level, stable electrochemical performance may be achieved, and in particular, the long-term cycling capacity retention may be significantly improved. In addition, as the method of the present disclosure may be applied as the dry process, it is possible to provide the effects of simplifying the process and improving productivity, and it may be easily used to manufacture large-area electrodes, and have technological superiority suitable for the commercial production of high-capacity lithium-ion batteries.

<u>BRIEF DESCRIPTION OF THE DRAWINGS</u>

The accompanying drawings illustrate exemplary embodiments of the present disclosure and together with the foregoing description, serve to provide a better understanding of the technical aspects of the present disclosure, and thus the present disclosure should not be construed as being limited to the accompanying drawings.

FIG. 1 shows schematically a surface portion and a central portion of a granule included in a negative electrode according to an embodiment of the present disclosure.

FIGS. 2a and 2b are schematic diagrams of a process of manufacturing a negative electrode according to an embodiment of the present disclosure.

FIG. 3 is a diagram showing a lamination step of laminating a negative electrode film onto two surfaces of a current collector according to an embodiment of the present disclosure.

## BEST MODE

Hereinafter, the present disclosure will be described in further detail to help the understanding of the present disclosure.

The terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

The terms as used herein are used to describe the exemplary embodiments of the present disclosure but not intended to be limiting. The singular forms include the plural forms unless the context clearly indicates otherwise.

The terms "comprise", "include" and "have" when used in this specification, specify the presence of stated elements, but do not preclude the presence or addition of one or more other elements, unless the context clearly indicates otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, A and/or B as used herein refers to either A or B or both.

The certain terms as used herein are provided for convenience of description but not intended to limit the present disclosure. The terms 'up', 'down', 'front', 'rear', 'in' and 'out' are used to describe the relative position or direction between elements rather than the absolute position, and indicate positions or directions in the drawings to which reference is made. These terms include words including them, their derivatives, and words of similar meanings.

In this specification, glass transition temperature (Tg) may be measured by a commonly used method well-known in the art, and may be, for example, measured by differential scanning calorimetry (DSC).

The term 'porosity' as used herein refers to the ratio of pore volume in a structure to its total volume and is indicated in vol%, and may be used interchangeably with void fraction, degree of porosity or the like. In the present disclosure, the measurement of the porosity is not limited to a particular method, and according to an embodiment of the present disclosure, for example, the porosity may be measured by the Brunauer-Emmett-Teller (BET) method using nitrogen gas, Hg porosimeter or ASTM D2873. Alternatively, the porosity of a separator may be calculated from a difference between the apparent density and the net density, wherein the net density of the separator is calculated from the density (apparent density) of the separator, a composition ratio of materials included in the separator and the density of each component.

The term "average particle size (D50)" as used herein refers to a particle size at 50% of cumulative particle size distribution of particles, and the particle size may be measured using a laser diffraction method. Specifically, the particle size distribution is calculated by dispersing a target powder in a dispersion medium, feeding it into a commercially available laser diffraction particle size measurement device (for example, Microtrac S3500) and measuring a diffraction pattern difference as a function of particle size when particles pass through a laser beam. The particle size D50 may be measured by calculating the particle diameter at 50% of the cumulative particle size distribution of particles in the measurement device.

The "thickness" of each layer included in the electrode as used herein may indicate a value measured by a method commonly used to measure the thickness. The thickness may be, for example, a value measured using a thickness measurement device (Mitutoyo, VL-50S-B) although the method for measuring the thickness is not limited thereto.

The "specific surface area" as used herein may refer to a value measured by a method commonly used to measure the specific surface area. The specific surface area may be, for example, a value measured by a flowable or fixed method although the method for measuring the specific surface area is not limited thereto.

An electrode manufacturing process for positive and negative electrodes applied to secondary batteries essentially includes coating a slurry including an active material, a binder, a conductive material and a solvent (a dispersion medium) on at least one surface of a current collector, and a drying process for drying the dispersion medium included in the slurry, and an electrode manufactured by the electrode manufacturing process is referred to as a wet electrode. The wet electrode has a disadvantage that during the drying process, the binder migrates to the electrode surface due to uneven shrinkage of the electrode or differences in evaporation rate of the solvent, resulting in uneven binder distribution in the thickness direction of the electrode layer. To solve the problem of secondary batteries including wet electrodes, attempts have been made on a dry process that does not use the solvent or dispersion medium, but in this case, the linear conductive material is very poorly dispersed in the active material layer of the dry process, and electrochemical devices such as secondary batteries including the above-described electrodes have the limited life characteristics and resistance characteristics.

The inventors have devised the present disclosure to improve the dispersion of binders and conductive materials in wet electrodes and dry electrodes attempted to solve the problems of wet electrodes.

In view of the above, according to an aspect of the present disclosure,

> there is provided a negative electrode including a current collector and a negative electrode active material layer located on at least one surface of the current collector,
> wherein the negative electrode active material layer includes granules including a silicon-based active material, a linear conductive material and a binder; and a fibrillated fluorine-containing binder connecting and holding the granules together.

The granules include the silicon-based active material, the linear conductive material and the binder.

That is, to solve the problem of the dry process that does not use solvents or dispersion media, i.e., poor dispersion of the linear conductive material in the active material layer, according to the present disclosure, the dry electrode is manufactured by preparing the granules including the linear conductive material together with the silicon-based active material and the dot-type binder, and mixing the granules with the fluorine-containing binder as described below, thereby achieving even distribution of the linear conductive material in the thickness direction of the negative electrode active material layer.

The granules may be composite particles including the silicon-based active material, the linear conductive material and the binder. In addition, the granules may further include any additional component if necessary.

In an embodiment of the present disclosure, the granules may be secondary particles formed in such a way that the silicon-based active material particles and the linear conductive material are combined together by the binder to form grains or granules. In the present disclosure, the granules may refer to the gathering of particles, and the granules may have a diameter ranging from 0.05 $\mu$m to 2 $\mu$m.

The silicon-based active material may include silicon (Si), silicon oxide (SiOx (0<x$\leq$2)), a Si/C composite (a silicon-carbon composite), or two or more of them. Specific examples of the silicon-based active material include Si, SiO, SiO/C or $SiO_2$, but is not limited thereto.

The Si/C composite may include a structure in which silicon-based particles (for example, silicon (Si) or silicon oxide (SiOx (0<x$\leq$2)) are physically dispersed or chemically bonded within a carbon-based support (a carbon matrix). The carbon support may include amorphous carbon (such as carbon black, activated carbon, hard carbon), graphite, carbon nanotubes, carbon nanofibers, graphene, or a combination of two or more thereof. In addition, the carbon support may be composed of amorphous carbon, graphite, carbon nanotubes, carbon nanofibers, graphene, or a combination of two or more thereof.

According to an embodiment of the present disclosure, the silicon-based particles may be included in an amount of from 5 parts by weight to 45 parts by weight, or from 10 parts by weight to 40 parts by weight, or from 15 parts by weight to 35 parts by weight, or from 20 parts by weight to 30 parts by weight, or from 5 parts by weight to 20 parts by weight, or from 20 parts by weight to 45 parts by weight, based on 100 parts by weight of the carbon support. According to an embodiment of the present disclosure, the carbon support may include activated carbon, and the silicon-based particles may include pure Si particles. The granules may further include other type of negative electrode active material than the silicon-based active material.

When the amount of the silicon-based particles relative to the carbon support falls within the aforementioned range, the lithium storage capacity may be increased while maintaining sufficient electrical conductivity, and the carbon support may effectively reduce the volume expansion of silicon, thereby suppressing cracks and delamination of the electrode structure, and as a result, the mechanical stability of the electrode and the charge/discharge characteristics (life characteristics) of the secondary battery may be improved.

Examples of the other type of negative electrode active material may include carbon-based active materials such as non-graphitizing carbon or graphite-based carbon (natural graphite or artificial graphite); metal composite oxides such as $Li_xFe_2O_3$ (0$\leq$x$\leq$1), $Li_xWO_2$(0$\leq$x$\leq$1), $Sn_xMe_{1-x}Me'_yO_z$(Me: Mn, Fe, Pb, Ge; Me': Al, B, P, Si, Groups 1, 2, and 3 elements in the periodic table, halogen; 0$\leq$x$\leq$1; 1$\leq$y$\leq$3; 1$\leq$z$\leq$8); lithium metals; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ or $Bi_2O_5$;

conductive polymers such as polyacetylene; or Li-Co-Ni based materials. According to an embodiment of the present disclosure, the granules may further include at least one type of carbon-based active material of natural graphite or artificial graphite.

The linear conductive material may include single-walled carbon nanotubes (SWCNT), multi-walled carbon nanotubes (MWCNT), carbon nanofibers, or two or more of them.

The carbon nanotubes include an allotrope of carbon including a graphite sheet having a cylindrical shape of a nano-sized diameter and featuring sp2 bonding structure and its array. The carbon nanotube array refers to a secondary structure formed by arrangement or agglomeration of carbon nanotubes. For example, the carbon nanotube array may include bundle-type carbon nanotubes of a bundle or rope shape in which a plurality of carbon nanotubes are arranged or aligned side by side in a specific direction, or entangled-type carbon nanotubes of a spherical or potato shape in which a plurality of carbon nanotubes are entangled in no specific direction.

In this instance, the multi-walled carbon nanotubes are hollow small tubes constructed from a coaxial cylindrical surface sleeve of multiple hexagonal lattices of carbon atoms, and the single-walled carbon nanotubes are composed of only one carbon cylindrical surface. The wall of this tubular structure is composed of hexagonal lattices similar to graphite sheets, and the intersection of the hexagonal lattices is where the carbon atoms are located and each carbon atom is adjacent to the neighboring carbon atoms, and at the same time, both ends of the tube (end caps) are closed by a polygonal structure composed of pentagonal carbon rings.

The linear conductive material, especially the single-walled carbon nanotubes (SWCNT) or the multi-walled carbon nanotubes (MWCNT) may have a BET surface area of 500 $m^2/g$ or more, or from 500 $m^2/g$ to 5,000 $m^2/g$, or 800 $m^2/g$ or more or from 800 $m^2/g$ to 5,000 $m^2/g$, or from 900 $m^2/g$ to 2,000 $m^2/g$. When the linear conductive material having the aforementioned BET surface area is used, this may have a beneficial effect on forming a conductive network between the silicon-based negative electrode active materials, thereby further improving the cycling characteristics of the secondary battery.

The linear conductive material may have a length of 0.5 $\mu$m to 100 $\mu$m. For example, the single-walled carbon nanotubes may have an average length of 2 $\mu$m to 100 $\mu$m, and the multi-walled carbon nanotubes may have an average length of 0.3 $\mu$m to 30 $\mu$m. The linear conductive material may have a cross-section diameter of 1 nm to 100 nm.

According to an embodiment of the present disclosure, the linear conductive material may be included in an amount of 0.2 to 10 parts by weight, or 0.2 to 5 parts by weight, or 0.3 to 5 parts by weight, or 0.2 to 3 parts by weight, or 0.2 to 2 parts by weight, or 0.2 to 1.6 parts by weight, or 0.3 to 1.6 parts by weight, based on 100 parts by weight of the granules. When the amount of the linear conductive material falls within the aforementioned range, the linear conductive material may effectively form a conductive network between the silicon-based negative electrode active materials in the granules, and further improve the cycling characteristics of the secondary battery including the granules.

When the linear conductive material in a solid form is directly used to produce the granules, the linear conductive material may form an agglomerate and may not be evenly mixed with the silicon-based active material and the binder, thereby failing to obtain the desired effect of the addition of the linear conductive material. Accordingly, the granules may be produced by adding the linear conductive material in a form of a linear conductive material dispersion further including a dispersant and a dispersion medium.

According to an embodiment of the present disclosure, the linear conductive material dispersion may include the linear conductive material, the polymer dispersant containing amine and the dispersion medium.

Alternatively, according to an embodiment of the present disclosure, the linear conductive material dispersion may include the linear conductive material, the polymer dispersant containing amine, a phenol-based compound including two or more aromatic rings, and the dispersion medium.

When the linear conductive material is added in the dispersion form as described above, despite the large specific surface area, because the linear conductive material such as carbon nanotubes is dispersed well, the initial viscosity of the dispersion is low, and time-dependent changes in viscosity are suppressed. In addition, when it is used to prepare a slurry for producing the granules, the linear conductive material may be evenly distributed between the active materials, and small spaces between the electrode active materials may be constantly maintained during drying of the slurry in the production of the granules. Furthermore, as the linear conductive material may be evenly distributed without forming agglomerates, sufficient conduction pathways may be formed by the linear conductive material even in a small amount. The average diameter of the linear conductive material may be measured by scanning electron microscopy (SEM) of the linear conductive material powder, and the average length of the linear conductive material may be measured by SEM of the linear conductive material dispersion. In addition, the linear conductive material included in the electrode active material layer may also be measured using SEM. That is, when the electrode active material layer including the linear conductive material is dissolved and dispersed in the solvent such as the dispersion medium (for example, water) and separated into a top layer and a bottom layer through centrifugation, the active material mainly settles in the bottom layer and the linear conductive material exists in the top layer, and the average diameter and the average length of the linear conductive material in the electrode active material layer may be measured by SEM observation using the supernatant.

The linear conductive material may be included in an amount of 0.01 wt% to 5 wt%, preferably 0.01 wt% to 3 wt%, more preferably 0.1 wt% to 2 wt%, and even more preferably 0.1 wt% to 1 wt%, based on the total weight of the linear conductive material dispersion. When the amount of the linear conductive material falls within the aforementioned range, this may have a beneficial effect on increasing the viscosity of the dispersion and improving the cycling characteristics of the secondary battery.

The dispersant is used to prevent agglomeration of the linear conductive material and achieve even distribution in the linear conductive material dispersion, and the linear conductive material dispersion may include the polymer dispersant containing amine and the phenol-based compound including two or more aromatic rings together as the dispersant. When the two specific dispersants are used together, time-dependent changes in viscosity of the linear conductive material dispersion may be significantly reduced.

In an embodiment of the present disclosure, the dispersant may be included in an amount of 10 to 2000 parts by weight, preferably 50 to 1000 parts by weight, and more preferably 70 to 500 parts by weight, based on 100 parts by weight of the linear conductive material. When the amount of the dispersant falls within the aforementioned range, the viscosity of the linear conductive material dispersion may be properly maintained, and degradation of the properties of the secondary battery caused by the dispersant acting as impurities may be prevented.

The polymer dispersant containing amine may include, for example, at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride and polyethylenimine.

When the specific polymer dispersant containing amine in the polymer structure is used, this may have a more beneficial effect on increasing the viscosity and suppressing time-dependent changes in viscosity.

The phenol-based compound including two or more aromatic rings may reduce the viscosity of the linear conductive material dispersion, in particular, an aqueous linear conductive material dispersion, due to the bulky structure generated by the two or more aromatic rings and the hydroxyl group contained in the phenol group, and significantly suppress the increase in viscosity over time.

The phenol-based compound may include at least one structure selected from the group consisting of a phenol structure, a catechol structure, a gallol structure and a naphthol structure in at least one of the aromatic rings, and specifically, may include at least one structure selected from the group consisting of a catechol structure and a gallol structure in at least one of the aromatic rings. The phenol structure is a structure in which one hydroxyl group is bonded to a benzene ring, the catechol structure is a structure in which two hydroxyl groups are bonded to a benzene ring, the gallol structure is a structure in which three hydroxyl groups are bonded to a benzene ring, and the naphthol structure is a structure in which one hydroxyl group is bonded to naphthalene.

When the phenol-based compound including two or more aromatic rings includes the above-described structure, it may be possible to achieve proper balance between interactions between the aromatic ring and the linear conductive material in the linear conductive material dispersion and interactions by hydrogen bonds between -OH of the phenol-based compound and the polymer dispersant, thereby reducing the viscosity of the linear conductive material dispersion and suppressing the increase in viscosity over time.

Specific examples of the phenol-based compound containing two or more aromatic rings may include at least one selected from the group consisting of baicalin, luteolin, taxifolin, myricetin, quercetin, rutin, catechin, epigallocatechin gallate, butein, piceatenol and tannic acid, and preferably, tannic acid, quercetin, epigallocatechin gallate or a combination thereof.

In an embodiment of the present disclosure, the aromatic ring included in the phenol-based compound including two or more aromatic rings may be one aromatic ring that is not fused to other aromatic ring or a structure in which two aromatic rings are fused together, and may not include a structure in which three or more aromatic rings are fused together.

That is, the scope of the phenol-based compound including two or more aromatic rings may preclude the inclusion of the structure in which three or more aromatic rings are fused within the molecular structure.

In case where the phenol-based compound including two or more aromatic rings includes the structure in which three or more aromatic rings are fused within the molecular structure, the three or more fused aromatic rings and the linear conductive material may create a strong bonding force above an appropriate level in the linear conductive material dispersion, inducing cohesion between the linear conductive materials, and it may not be suitable for improving the dispersion of the linear conductive material. In addition, it may result in imbalance between interactions between the aromatic ring and the linear conductive material in the linear conductive material dispersion and interactions by hydrogen bonds between -OH of the phenol-based compound and the polymer dispersant, thereby failing to properly reduce the viscosity of the linear conductive material dispersion and suppress the increase in viscosity over time.

Meanwhile, the phenol-based compound may be included in an amount of 1 to 100 parts by weight, or 5 to 100 parts by weight, or 10 to 100 parts by weight, based on 100 parts by weight of the polymer dispersant containing amine. When the amount of the polymer dispersant containing amine and the amount of the phenol-based compound fall within the aforementioned range, this may have a more beneficial effect on reducing the viscosity of the dispersion and enhancing the storage stability.

The dispersion medium (solvent) is a liquid medium for dispersing the linear conductive material, the polymer dispersant and the phenol-based compound containing two or more aromatic rings, and is used to provide the linear conductive material dispersion by pre-dispersion in order to prevent agglomeration that may occur when the linear conductive material is directly mixed with the negative electrode active material to prepare the slurry for granules.

The dispersion medium may include any liquid medium used in the technical field of the present disclosure to dissolve or disperse the linear conductive material, the polymer dispersant and the phenol-based compound containing two or more aromatic rings at or above a predetermined level. The dispersion medium may include a water-based solvent, for example, water.

The linear conductive material dispersion of the present disclosure as described above may be prepared by a preparation method including the steps of: (1) mixing the linear conductive material (for example, carbon nanotubes), the polymer dispersant, the phenol-based compound containing two or more aromatic rings and the dispersion medium to prepare a mixture; and (2) milling the mixture.

In the step (1), the linear conductive material, the polymer dispersant, the phenol-based compound containing two or more aromatic rings and the dispersion medium are mixed to prepare the mixture.

The mixture preparation step may be performed under temperature conditions in which the properties of the mixture including viscosity do not change by the evaporation of the dispersion medium. For example, the mixture preparation step may be performed at the temperature of 50°C or less, and more specifically, between 5°C and 50°C.

In the step (2), the mixture is subjected to dispersion processing to prepare the linear conductive material dispersion.

The milling may be, for example, performed by a ball mill, a bead mill, a disc mill, a basket mill or a high pressure homogenizer and more specifically, a milling method using a disc mill or a high pressure homogenizer.

In the milling by the disk mill, the bead size may be properly determined according to the type and amount of the linear conductive material and the type of the dispersant, and specifically, the bead diameter may range from 0.1 mm to 5 mm, and more specifically, from 0.5 mm to 4 mm. In addition, the bead milling process may be performed at the speed of from 2,000 rpm to 10,000 rpm, and more specifically, from 5,000 rpm to 9,000 rpm.

The milling by the high pressure homogenizer is, for example, done by applying pressure to the mixture using a plunger pump of the high pressure homogenizer and forcing it through a narrow opening in a homogenizing valve, causing cavitation, shear, impact and explosion forces.

The milling process may be performed according to the degree of dispersion of the linear conductive material dispersion, and specifically, may be performed for 30 minutes to 120 minutes, and more specifically for 60 minutes to 90 minutes.

According to an embodiment of the present disclosure, the linear conductive material is not directly added to the mixture for making the dry negative electrode film, and instead, the linear conductive material is mixed with the negative electrode active material including the silicon-based active material that changes in volume to a great extent and the binder in the dispersion medium and dried to produce the granules, and the obtained granules are used to make the dry negative electrode film. As a result, the linear conductive material may be evenly dispersed in the dispersion medium, yielding the granules with even dispersion of the linear conductive material, and as the granules are included in the negative electrode film, the dispersion of the linear conductive material in the negative electrode active material layer obtained in the end may be significantly improved.

In addition, when the negative electrode active material including the silicon-based active material having high capacity but large volume changes, which place limitation on the application, is prepared in the form of granules, and the linear conductive material evenly dispersed within the granules and the silicon-based active material are connected and held together by the binder, even though the silicon-based active material changes in volume within the negative electrode active material layer, a conductive network may be stably formed between the silicon-based active materials in the negative electrode active material layer by the evenly dispersed linear conductive material connecting in line contact, and as a result, the electrical properties such as the life characteristics of the electrochemical device such as the secondary battery employing the negative electrode may be significantly improved.

In an embodiment of the present disclosure, the amount of the binder may range from 0.5 to 10 parts by weight, or from 0.5 to 8 parts by weight, or from 0.5 to 7 parts by weight, or from 0.5 to 6 parts by weight, or from 0.5 to 5 parts by weight, or from 0.5 to 4 parts by weight, or from 0.5 to 2 parts by weight, or from 1 to 8 parts by weight, or from 1 to 7 parts by weight, or from 1 to 6 parts by weight, or from 1 to 5 parts by weight, or from 1 to 4 parts by weight, or from 1 to 2 parts by weight, based on 100 parts by weight of the granules. When the amount of the binder falls within the aforementioned range, the binder plays a role in connecting and holding the silicon-based active material and the linear conductive material together within the granules, thereby minimizing the volume expansion of the silicon-based active material, and preventing the blockage of lithium ion movement and its consequential resistance rise when the granules are used in the negative electrode of the secondary battery, leading to improved cycling characteristics of the secondary battery. In this instance, the binder included in the granules may be referred to as a binder for granules.

In an embodiment of the present disclosure, the binder may include at least one of a linear binder or a dot-type binder.

The linear binder acts as a binding agent in the composition including the active material, and may refer to a polymer compound featuring a structure in which polymer chains are linearly arranged. The linear binder has flexible polymer chains to stably bind the active material and the conductive material to the current collector, and absorb the volume expansion and contraction of the electrode during charging/discharging, thereby maintaining the mechanical stability and electrical contact of the electrode.

The dot-type binder may refer to a binder having a property that it does not completely dissolve in the solvent when dispersed in the solvent, it maintains the point shape with a few hundred nanometers in size, it is dispersed well and surrounds the active material surface, and it is easier to control the amount of the binder than the active material due to lower viscosity than solids. When the dot-type binder is used together with the silicon-based active material and the linear conductive material within the granules, it may be possible to sufficiently cover the active material surface and maintain the dispersion of the linear conductive material.

The dot-type binder is not limited to a particular shape, but a particulate form is preferred because it has a good binding ability and can suppress the capacitance decline of the electrode or degradation over repeated charging/discharging. Examples of the particulate-form dot-type binder may include a dispersed form of dispersible binder particles in a solvent such as water, like latex, and a powder form obtained by drying the dispersion.

The linear binder may include an acrylate-based polymer.

Examples of the acrylate-based polymer may include polymer including monomer units derived from acrylic acid ester and/or methacrylic acid ester. The ratio of the monomer units derived from acrylic acid ester and/or methacrylic acid ester in the acrylate-based polymer may be usually in a range of 40 wt% or more, preferably 50 wt% or more, and more preferably 60 wt% or more. Specific examples of the acrylate-based polymer may include a cross-linked acrylate-based polymer such as an acrylamide-acrylate copolymer, an acrylic acid 2-ethylhexyl-methacrylic acid-acrylonitrile-ethyleneglycoldimethacrylate copolymer, an acrylic acid 2-ethylhexyl-methacrylic acid-methacrylonitrile-diethyleneglycoldimethacrylate copolymer, an acrylic acid 2-ethylhexyl-styrene-methacrylic acid-ethyleneglycoldimethacrylate copolymer, a butyl acrylate-acrylonitrile-diethyleneglycoldimethacrylate copolymer or a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer or an ethylene-ethyl methacrylate copolymer; or a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile or methacrylic acid. Besides, the copolymer of ethylene and (meth) acrylic acid such as the ethylene-acrylic acid copolymer or the ethylene-methacrylic acid copolymer may be used as the dispersible binder.

According to an embodiment of the present disclosure, the acrylate-based polymer may include the acrylamide-acrylate copolymer.

The dot-type binder may include a diene-based polymer, a styrene-based polymer, or two or more of them.

Examples of the diene-based polymer may include polymer including monomer units derived from conjugated dienes such as butadiene or isoprene, and its hydrogenated products. The ratio of the conjugated diene-derived monomer units in the diene-based polymer may be usually in a range of 40 wt% or more, preferably 50 wt% or more, and more preferably 60 wt% or more. Specifically, the diene-based polymer may include a conjugated diene homopolymer such as polybutadiene or polyisoprene; an aromatic vinyl-conjugated diene copolymer such as a styrene-butadiene copolymer (SBR) with carboxyl modification; a cyanated vinyl-conjugated diene copolymer such as an acrylonitrile-butadiene copolymer (NBR); hydrogenated SBR or hydrogenated NBR.

The styrene-based polymer may include polymer having styrene monomer derived repeat units, for example, a styrene homopolymer (polystyrene) or a styrene copolymer. Examples of the styrene copolymer may include a block copolymer such as a styrene-ethylene-butadiene copolymer, a styrene-butadiene-propylene copolymer, a styreneisoprene copolymer, a styrene-n-butyl acrylate-itaconic acid-methyl methacrylate-acrylonitrile copolymer, , a styrene-butadiene block copolymer, a styrene-butadienestyrene·block copolymer, a styrene-ethylene-butylene-styrene·block copolymer, a styreneisoprene·block copolymer or a styrene-ethylene-propylene-styrene·block copolymer.

In addition, in an embodiment of the present disclosure, the binder may include the linear binder and the dot-type binder. In an embodiment of the present disclosure, the binder may include the acrylate-based polymer (for example, an acrylamide-acrylate copolymer or an acrylamide-acrylic acid-acrylonitrile copolymer) as the linear binder, and the diene-based polymer or styrene-based polymer (for example, a styrene-butadiene copolymer (SBR)) as the dot-type binder.

When the binder includes both the linear binder and the dot-type binder, this may provide a synergistic effect on improving mechanical, electrical and chemical stability in the electrode and the secondary battery, which may be advantageous in the secondary battery design requiring high energy density, long life and high reliability.

Because it has a long and continuous molecular structure, the linear binder may play a role in increasing the bonding strength between the active material and the current collector in the electrode, and effectively distributing mechanical stress that may occur in the manufacture of the electrode and during operation of the secondary battery, thereby preventing delamination or cracks in the electrode, and because it has a three-dimensional bonding structure, the dot-type binder may play a role in improving partial adhesion strength, and absorbing stress caused by volume expansion during charging/discharging, thereby preventing physical damage to the electrode caused by repeated charge/discharge, and accordingly, the use of both the linear binder and the dot-type binder may improve the mechanical stability of the electrode, and maintain the stability over repeated charge and discharge cycles, thereby extending the life of the battery.

In addition, the linear binder may help achieve even dispersion of the active material within the electrode, thereby improving the conductivity and electrical contact of the electrode, and the dot-type binder may form strong bonds at small contact points to optimize the contact between the active material and the electrolyte, thereby contributing to lower ion movement resistance, and accordingly the combination of the linear binder and the dot-type binder may form more efficient movement pathways of ions and electrons within the electrode, thereby improving the energy density and output characteristics.

According to an embodiment of the present disclosure, when the binder includes the linear binder and the dot-type binder, a weight ratio of the linear binder to the dot-type binder may range from 70:30 to 30:70, or from 60:40 to 40:60, or from 70:50 to 50:70. When the weight ratio of the linear binder to the dot-type binder falls within the aforementioned range, it may be possible to maximize the synergy effect of the combination of the linear binder and the dot-type binder, thereby improving the mechanical stability of the electrode and increasing the life of the battery over repeated charge and discharge cycles.

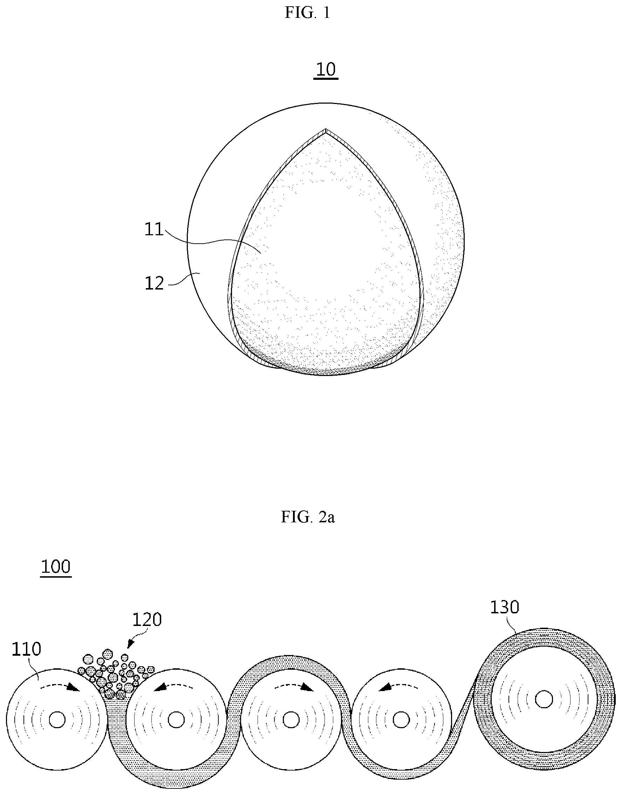

FIG. 1 shows schematically a surface portion and a central portion of the granule according to an embodiment of the present disclosure.

Referring to FIG. 1, the granule 10 has a larger amount of binder included in the surface portion 12 of the granule than the amount of dot-type binder included in the central portion 11 of the granule. The amount of binder may refer to weight or volume.

Together with or independently of this, the granule 10 has a larger amount (wt%) ($B_s/G_t$) of dot-type binder included in the surface portion 12 of the granule than the amount (wt%) ($B_c/G_t$) of binder included in the central portion 11 of the granule based on the total weight 100 wt% of the granule. Here, $B_c$ denotes the weight of dot-type binder included in the central portion, $B_s$ denotes the weight of binder included in the surface portion, and Gt denotes the total weight of the granule particles.Together with or independently of this, the granule 10 has a larger amount (vol%) of binder ($B_s/G_t$) included in the surface portion 12 of the granule than the amount (vol%) of binder ($B_c/G_t$) included in the central portion 11 of the granule based on the total volume 100 vol% of the granule. Here, $B_c$ denotes the volume of binder included in the central portion, $B_s$ denotes the volume of binder included in the surface portion, and $G_t$ denotes the total volume of the granule particles.

Here, the surface portion may refer to a region near the surface of the granule to a predetermined depth in a direction from the surface of the granule toward the center of the granule, and the central portion may refer to a region other than the surface portion. In an embodiment of the present disclosure, the surface portion may refer to a region of 70% or more of the radius to the surface of the granule in an outward direction of the granule from the center of the granule. In an embodiment of the present disclosure, the surface portion may refer to, for example, a region from 80% or more of the radius, 85% or more of the radius, 90% or more of the radius or 95% or more of the radius to the surface of the granule.

In an embodiment of the present disclosure, the center of the granule may refer to a 1/2 point of the longest diameter of the granule.

In an embodiment of the present disclosure, the amount of binder in the region of 90% or more of the radius to the surface of the granule, starting from the center of the granule particles may be in a range of 50 wt% or more, 60 wt% or more, 70 wt% or more, 80 wt% or more, or 90 wt% or more of the total weight 100 wt% of the granule in the corresponding region.

In another embodiment of the present disclosure, the amount of binder in the region of 95% or more of the particle radius to the surface of the granule, starting from the center of the granule may be in a range of 50 wt% or more, 60 wt% or more, 70 wt% or more, 80 wt% or more, or 90 wt% or more of the total weight 100 wt% of the granule in the corresponding region.

In another embodiment of the present disclosure, the amount of binder in the region of 99% or more of the radius to the surface of the granule, starting from the center of the granule particles may be in a range of 50 wt% or more, 60 wt% or more, 70 wt% or more, 80 wt% or more, or 90 wt% or more of the total weight 100 wt% of the granule in the corresponding region.

In an embodiment of the present disclosure, the amount of binder in the region of 90% or more of the radius to the surface of the granule, starting from the center of the granule particles may be in a range of 50 vol% or more, 60 vol% or more, 70 vol% or more, 80 vol% or more, or 90 vol% or more of the total volume 100 vol% of the granule in the corresponding region.

In another embodiment of the present disclosure, the amount of binder in the region of 95% or more of the particle radius to the surface of the granule, starting from the center of the granule may be in a range of 50 vol% or more, 60 vol% or more, 70 vol% or more, 80 vol% or more, or 90 vol% or more of the total volume 100 vol% of the granule in the corresponding region.

In another embodiment of the present disclosure, the amount of binder in the region of 99% or more of the radius to the surface of the granule, starting from the center of the granule particles may be in a range of 50 vol% or more, 60 vol% or more, 70 vol% or more, 80 vol% or more, or 90 vol% or more of the total volume 100 vol% of the granule in the corresponding region.

Describing the granule in more detail, the granule may have the central portion including one or more silicon-based active materials; and the surface portion located at all or part of the outside of the central portion and including the binder binding the silicon-based active materials. That is, in the central portion of the granule, the plurality of silicon-based active materials may be in surface contact, line contact, point contact or two or more of them to form an agglomerate, and in the surface portion of the granule, the binder may be located at all or part of the outside of the agglomerate to bind and hold the plurality of silicon-based active materials in the central portion of the granule together.

According to an embodiment of the present disclosure, a small amount of binder may be further included in the central portion of the granule to connect and hold the plurality of silicon-based active materials in the central portion together. However, as described above, the amount of binder in the surface portion is preferably present at a larger ratio than the amount of binder in the central portion.

Meanwhile, in an embodiment of the present disclosure, the granule may have an aspect ratio of 0.5 to 1.0, preferably 0.75 to 1.0. The aspect ratio may refer to a ratio of the major axis length to the minor axis length of the granule. In another embodiment of the present disclosure, an average aspect ratio of the granules may have a value of from 0.5 to 1.0, preferably from 0.75 to 1.0, and in this case, the average aspect ratio may refer to a ratio of the average major axis length to the average minor axis length of the granule particles. In this instance, the average minor axis length may refer to the average of lengths in the axial direction having the shortest length of the granules, and the average major axis length may refer to the average of lengths in the axial direction having the longest length of the granules. When the aspect ratio of the granule falls within the aforementioned range, it is advantageous in terms of sufficient fluidity suitable for the process.

In an embodiment of the present disclosure, the particle size of the granule may range from 0.1 $\mu$m to 1,000 $\mu$m on the basis of the longest particle size. In another embodiment of the present disclosure, the average particle size (D50) of the granules may range from 0.1 $\mu$m to 1,000 $\mu$m.

According to an embodiment of the present disclosure, the granule may include 80 to 98 parts by weight of the silicon-based active material, 0.5 to 10 parts by weight of the linear conductive material and 0.5 to 10 parts by weight of the binder. Alternatively, the granule may include the silicon-based active material in an amount of 85 to 95 parts by weight, the linear conductive material in an amount of 0.5 to 5 parts by weight, and the binder in an amount of 0.5 to 8 parts by weight, or 0.5 to 7 parts by weight, or 0.5 to 6 parts by weight, or 0.5 to 5 parts by weight, or 0.5 to 4 parts by weight, or 1 to 8 parts by weight, or 1 to 7 parts by weight, or 1 to 6 parts by weight, or 1 to 5 parts by weight, or 1 to 4 parts by weight.

When the amounts of the silicon-based active material, the linear conductive material and the binder fall within the aforementioned ranges, the cohesion strength between the active materials in the negative electrode may increase, and the dispersion of the linear conductive material and the binder may be significantly improved, so the cell performance such as life characteristics of the electrochemical device including the negative electrode may be significantly improved.

In addition to the silicon-based active material, the granule may further include other type of negative electrode active material.

Examples of the other type of negative electrode active material may include carbon-based active materials such as non-graphitizing carbon, graphite-based carbon (natural graphite, artificial graphite); metal composite oxides such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Groups 1, 2, and 3 elements in the periodic table, halogen; $0 \leq x \leq 1$; $1 \leq y \leq 3$; $1 \leq z \leq 8$); lithium metals; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymers such as polyacetylene; Li-Co-Ni based materials. According to an embodiment of the present disclosure, the granule may further include at least one type of carbon-based active material of natural graphite or artificial graphite.

According to an embodiment of the present disclosure, the granule may include 30 to 70 parts by weight of the silicon-based active material, 30 to 70 parts by weight of the different type of negative electrode active material other than the silicon-based active material, 0.5 to 10 parts by weight of the linear conductive material, and 0.5 to 10 parts by weight of the binder.

Alternatively, the granule may include 35 to 70 parts by weight of the silicon-based active material, 35 to 70 parts by weight of the different type of negative electrode active material other than the silicon-based active material, 0.5 to 5 parts by weight of the linear conductive material, and 0.5 to 5 parts by weight of the binder.

The negative electrode active material layer includes the granules including the silicon-based active material, the linear conductive material and the binder; and the fibrillated fluorine-containing binder to connect and hold the granules together.

The fluorine-containing binder is not limited to a particular type and may include any type of fluorine-containing binder that can be microfibrillated by the step of producing the negative electrode mixture powder. The microfibrillation refers to treatment, causing high molecular polymer into smaller pieces, and may be, for example, performed using a mechanical shear force. Specific examples of the fluorine-containing binder may include polytetrafluoroethylene (PTFE).

In addition, according to an embodiment of the present disclosure, the negative electrode active material layer may further include, as the additional binder, at least one of polyvinylidene fluoride (PVdF)-based copolymer such as PVdF or polyvinylidene fluoride-co-hexafluoropropylene (PVdF-HFP), or fluororubber such as FKM-based copolymer.

According to an embodiment of the present disclosure, the negative electrode active material layer may include the fluorine-containing binder in an amount of 5 to 30 parts by weight, or 5 to 25 parts by weight, or 10 to 25 parts by weight, or 10 to 30 parts by weight, or 10 to 20 parts by weight, based on 100 parts by weight of the granules.

According to an embodiment of the present disclosure, the negative electrode active material layer may include the fluorine-containing binder in an amount of 0.1 to 2 parts by weight, or 0.2 to 1 part by weight, or 0.5 to 1 part by weight, or 0.1 to 0.5 parts by weight, based on 100 parts by weight of the negative electrode active material.

When the amount of the fluorine-containing binder falls within the aforementioned range based on the amount of the granules and the amount of the negative electrode active material, the fluorine-containing binder may help form a mixture lump by sufficient fibrillation in the subsequent kneading process, make it easy to form the negative electrode film through the shaping of the mixture powder formed through the grinding process, and ensure the properties of the negative electrode film and the optimal amount of the silicon-based active material, thereby preventing capacity decline and ensuring sufficient conductivity.

In case where the fluorine-containing binder includes polytetrafluoroethylene (PTFE), the capacity decline of the electrochemical device, for example, the secondary battery occurs due to side reaction with electrons migrated to the negative electrode, but the present disclosure may reduce the amount of polytetrafluoroethylene (PTFE), thereby preventing side reaction and performance degradation of the secondary battery.

According to an embodiment of the present disclosure, in addition to the granules and the fluorine-containing binder, the negative electrode active material layer may further include other necessary additive, for example, an additional binder, an additional conductive material or a filler.

The additional binder may further include at least one of PVDF-based copolymer such as PVdF or PVdF-HFP; fluororubber such as FKM-based copolymer; or olefin-based polymer such as polyethylene or polypropylene.

The additional conductive material is not limited to a particular type and may include any material having conductivity without causing any chemical change in the corresponding battery, and may include, for example, graphite such as natural graphite or artificial graphite; carbon black such as carbon black, acetylene black, Ketjen black, channel black, furnace black, lamp black or thermal black; activated carbon; conductive fibers such as carbon fibers or metal fibers; fluorocarbon; metal powders such as aluminum powder or nickel powder; conductive whiskers such as zinc oxide whiskers or potassium titanate whiskers; conductive metal oxides such as titanium oxide; or conductive materials such as polyphenylene derivatives.

The filler may play a role in suppressing the expansion of the electrode, and is not limited to a particular type and may include any fibrous material that does not cause any chemical change in the corresponding battery, for example, olefin-based polymer such as polyethylene or polypropylene; or fibrous materials such as glass fibers or carbon fibers.

In addition, the active material loading amount of the negative electrode active material layer may range from 3 $mAh/cm^2$ to 15 $mAh/cm^2$, specifically from 4 $mAh/cm^2$ to 10 $mAh/cm^2$, or from 4 $mAh/cm^2$ to 6 $mAh/cm^2$, or from 4 $mAh/cm^2$ to 5 $mAh/cm^2$, or from 4.8 $mAh/cm^2$ to 4.9 $mAh/cm^2$.

Here, the active material loading amount is a value calculated as follows.

Loading amount $(mAh/cm^2)$ = [Capacity of the active material (mAh/g)] X [Weight percent of the active material in the negative electrode active material layer (wt%) x Weight per unit area of the negative electrode active material layer $(g/cm^2)$]

The porosity of the negative electrode active material layer of the negative electrode may range from 18% to 50%, or from 20% to 45%, or from 20% to 40%, or from 20% to 35%, or from 22% to 30%, or from 20% to 29%, or from 23.1% to 28%. The porosity may slightly change depending on effects to which focus is given.

However, when the porosity of the negative electrode active material layer falls within the aforementioned range, this has a beneficial effect on electrolyte wetting, leading to superior life characteristics and output characteristics, and there is no need to increase the volume to achieve the same capacity, so it is advantageous in terms of energy density per volume.

The porosity of the negative electrode active material layer may be calculated by the following Relation equation using the apparent density of the negative electrode active material layer as measured and the actual density calculated based on the actual density and composition of each component.

$$\text{Porosity (\%)} = \{1 - (\text{Apparent density/Actual density})\} \text{ X } 100$$

In an embodiment of the present disclosure, the crystallinity of the fluorine-containing binder in the negative electrode active material layer may be equal to or less than 10%.

In the present disclosure, the degree of crystallinity Xc may be measured through DSC, and is based on temperature (peak temperature) at the time of highest enthalpy in crystallization. Specifically, the degree of crystallinity is a % ratio obtained by dividing an enthalpy of fusion ($\triangle H_m$) value actually measured by DSC by an enthalpy of fusion ($\triangle H_m^0$) (equilibrium heat of fusion) value of a theoretically perfect crystal (degree of crystallinity 100%) and may be calculated by the following Relation equation 1. Here, for the enthalpy of fusion value ($\triangle H_m^0$) of the theoretically perfect crystal, reference may be made to polymer handbook for known polymer, and in unknown or newly synthesized materials, the enthalpy of fusion value ($\triangle H_m^0$) of the theoretically perfect crystal may be calculated by extrapolation involving extending the degree of crystallinity beyond two points.

[Relation equation 1]

$$Xc\ (\%) = (\triangle H_m \div \triangle H_m^0) \times 100$$

In addition to the linear conductive material included in the granules, the negative electrode active material layer may further include other additional conductive material. The additional conductive material is not limited to a particular type and may include any material having conductivity without causing any chemical change in the corresponding battery, and may include, for example, each independently, graphite such as natural graphite or artificial graphite; carbon black such as carbon black, acetylene black, Ketjen black, channel black, furnace black, lamp black or thermal black; conductive fibers such as carbon fibers or metal fibers; fluorocarbon; metal powders such as aluminum powder or nickel powder; conductive whiskers such as zinc oxide whiskers or potassium titanate whiskers; conductive metal oxides such as titanium oxide; or conductive materials such as polyphenylene derivatives. Specifically, to evenly mix the conductive material and improve conductivity, the conductive material may include at least one selected from the group consisting of activated carbon, graphite, carbon black and carbon nanotubes.

The current collector is not limited to a particular type and may include any material having high conductivity without causing any chemical change in the battery, for example, stainless steel, aluminum, nickel, titanium, sintered carbon, copper, or aluminum or stainless steel treated with carbon, nickel, titanium or silver on the surface. Additionally, the current collector may have the microtextured surface to increase the adhesion strength of the positive electrode active material, and may come in various type, for example, a film, a sheet, a foil, a net, a porous body, a foam or a nonwoven fabric.

A primer layer may be present on all or part of at least one surface of the current collector.

The primer layer may include a primer layer binder and a primer layer conductive material, and the sum of amounts of the primer layer binder and the primer layer conductive material in the primer layer may be equal to or larger than 90 wt%.

In this instance, when the primer layer includes the primer layer binder and the primer layer conductive material such that the sum of amounts of the primer layer binder and the primer layer conductive material is equal to or larger than 90 wt%, it may be possible to ensure time-dependent stability of the primer layer, thereby achieving good properties such as adhesion strength and life characteristics, but the present disclosure is not limited thereto.

The primer layer will be described in detail below.

According to an embodiment of the present disclosure, the sum of amounts of the primer layer binder and the primer layer conductive material in the primer layer may be specifically in a range of 91 wt% or more, 92 wt% or more, 93 wt% or more, 94 wt% or more, 95 wt% or more, 96 wt% or more, 97 wt% or more, 98 wt% or more, 99 wt% or more, 100 wt% or less, 99 wt% or less, 98 wt% or less, 95 wt% or less, or 93 wt% or less.

According to an embodiment of the present disclosure, the primer layer includes the primer layer binder and the primer layer conductive material, and may further include a dispersant.

According to another embodiment of the present disclosure, the primer layer may include the primer layer binder and the primer layer conductive material, but may substantially not include the dispersant.

In this specification, "substantially not including" specifies not only that the corresponding component is not included at all, but also that the corresponding component is included in too small amount to perform the function of the corresponding component. For example, the amount of the component not substantially included may be in a range of 6 wt% or less, 5 wt% or less, 4 wt% or less, 3 wt% or less, 2 wt% or less, 1 wt% or less, 0.5 wt% or less, or 0 wt% (i.e., none).

Accordingly, the primer layer 'substantially not including the dispersant' specifies not only that the primer layer does not include the dispersant at all, but also that the primer layer includes the dispersant in too small amount for the dispersant to perform the function of dispersing the binder and the conductive material. For example, the amount of the dispersant in the primer layer may be in a range of 6 wt% or less, 5 wt% or less, 4 wt% or less, 3 wt% or less, 2 wt% or less, 1 wt% or less, 0.5 wt% or less, or 0 wt% (i.e., none).

According to an embodiment of the present disclosure, the dispersant substantially not included may cause time-dependent changes of the primer layer when it decomposes upon exposure to air.

The dispersant may include cellulose-based polymer, an emulsion-type surfactant, or two or more of them, but is not limited thereto.

The cellulose-based polymer may include, for example, carboxymethyl cellulose (CMC), an alkali metal salt of carboxymethyl cellulose, hydroxymethyl cellulose (HMC), an alkali metal salt of hydroxymethyl cellulose, hydroxyethyl cellulose (HEC), an alkali metal salt of hydroxyethyl cellulose, hydroxypropyl cellulose (HPC), an alkali metal salt of hydroxypropyl cellulose, ethylhydroxyethyl cellulose (EHEC), methylhydroxymethyl cellulose (MHMC), methylhydroxyethyl cellulose (MHEC), ethylhydroxymethyl cellulose (EHMC), methylcellulose (MC), ethylcellulose (EC), hydroxypropylmethyl cellulose (HPMC), hydroxyethyl methyl cellulose (HEMC) or a mixture thereof, but is not limited thereto.

The emulsion-type surfactant may include, for example, a nonionic surfactant, an anionic surfactant, an amphoteric surfactant, or a mixture thereof, but is not limited thereto. The nonionic surfactant may include, for example, ethoxylates, amide ethoxylates, amine oxides, alkyl glucosides or a mixture thereof, but is not limited thereto. The anionic surfactant may include, for example, phosphate esters, isothiocynates, sulfates, sulfonates, taurates or a mixture thereof, but is not limited thereto. The amphoteric surfactant may include, for example, betaines, glycinates, alkylamido alkylamines or a mixture thereof, but is not limited thereto.

According to another embodiment of the present disclosure, the primer layer may substantially not include the cellulose-based polymer as the dispersant.

According to another embodiment of the present disclosure, the primer layer may substantially not include carboxymethylcellulose, hydroxypropylmethylcellulose or a mixture thereof as the dispersant.

According to another embodiment of the present disclosure, the primer layer may substantially not include the emulsion-type surfactant.

According to an embodiment of the present disclosure, the primer layer binder may include any known binder commonly used in the primer layer without limitation.

According to another embodiment of the present disclosure, the primer layer binder may preferably include any type of binder that ensures time-dependent stability of the primer layer. Specifically, the binder may have a glass transition temperature Tg of 45°C or less. More specifically, the glass transition temperature of the binder may range from -40°C to 45°C. The glass transition temperature of the binder may range, for example, from -35°C to 45°C, or from -30°C to 40°C, or from -25°C to 35°C, or from -20°C to 30°C, or from -15°C to 25°C.

According to another embodiment of the present disclosure, the primer layer binder may include, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them. Specifically, the binder may include styrene butadiene rubber (SBR), nitrile butadiene rubber (NBR), polymethylmethacrylate, polyethylhexylacrylate, polybutylacrylate, or two or more of them.

According to another embodiment of the present disclosure, the primer layer binder may include any one selected from the above-described types of binders having the above-described glass transition temperature values or a mixture thereof.

According to another embodiment of the present disclosure, the primer layer binder may include a styrene butadiene copolymer (SBR) having the glass transition temperature Tg ranging from -40°C to 45°C, nitrile butadiene rubber (NBR) having the glass transition temperature Tg ranging from -40°C to 45°C, or a mixture thereof.

According to an embodiment of the present disclosure, the primer layer conductive material may have a specific surface area ranging from 10 m$^2$/g to 1,400 m$^2$/g. For example, the conductive material may have the specific surface area ranging from 10 m$^2$/g to 400 m$^2$/g, or from 30 m$^2$/g to 1,400 m$^2$/g.

According to another embodiment of the present disclosure, the primer layer conductive material may have the specific surface area ranging from 30 m$^2$/g to 1,400 m$^2$/g, and a spherical shape. In this instance, the primary particle size of the conductive material having the spherical shape may range, for example, from 10 nm to 100 nm, and specifically from 15 nm to 70 nm, but is not limited thereto.

According to another embodiment of the present disclosure, the primer layer conductive material may have a tubular (tube type) shape with the specific surface area ranging from 10 m$^2$/g to 400 m$^2$/g. In this instance, in the conductive material having the tubular shape, the diameter of a cross section in a direction perpendicular to the length direction may range from 0.1 nm to 3 nm, and specifically from 0.3 nm to 1.5 nm, but is not limited thereto.

The primer layer conductive material is not limited to a particular type and may include any material having conductivity without causing any chemical change in the corresponding battery, and for example, may include graphite such as natural graphite or artificial graphite; carbon black-based carbon compounds such as carbon black, acetylene black, Ketjen black, channel black, furnace black, lamp black or thermal black; conductive fibers such as carbon fibers or metal fibers; fluorocarbon; metal powder such as aluminum powder or nickel powder; conductive whiskers such as zinc oxide whiskers or potassium titanate whiskers; conductive metal oxide such as titanium oxide; or conductive materials such as polyphenylene derivatives. Specifically, to evenly mix the conductive material and improve conductivity, the conductive material may include activated carbon, graphite, carbon black, carbon nanotubes or a mixture thereof, and more specifically, activated carbon.

According to an embodiment of the present disclosure, the primer layer may include the above-described composition and have a thickness ranging from 300 nm to 1.5 $\mu$m, specifically from 700 nm to 1.3 $\mu$m, but is not limited thereto.

According to an aspect of the present disclosure,

there is provided a method for manufacturing the negative electrode according to an embodiment of the present disclosure, including the steps of: preparing the mixture including the granules including the silicon-based active material, the linear conductive material and the binder; and the fluorine-containing binder;

kneading the mixture in a range between 70°C and 200°C and under a pressure equal to or higher than normal pressure to produce the mixture lump;

grinding the mixture lump to obtain the negative electrode mixture powder;

feeding the negative electrode mixture powder between a plurality of rolls to perform calendaring processing to form the negative electrode film; and

attaching the negative electrode film to at least one surface of the current collector.

According to an embodiment of the present disclosure, the granules may be produced through the steps of: mixing the silicon-based active material, the linear conductive material and the binder with the dispersion medium to prepare the slurry; and spray-drying the slurry.

First, the silicon-based active material, the linear conductive material and the binder are dispersed or dissolved in the dispersion medium (the solvent for the binder) to obtain the slurry in which the silicon-based active material, the linear conductive material and the binder are dispersed or dissolved.

The dispersion medium used to obtain the slurry is, the most suitably, water, but an organic solvent may be used. The organic solvent may include, for example, alkylalcohols such as methylalcohol, ethylalcohol or propylalcohol; alkylketones such as acetone or methylethylketone; ethers such as tetrahydrofuran, dioxane or diglyme; amides such as diethylformamide, dimethylacetoamide, N-methyl-2-pyrrolidone (hereinafter referred to as NMP) or dimethylimidazolidinone; or sulfur-based solvents such as dimethylsulfoxide or sulfolane, but alcohols are preferred. When the organic solvent having lower boiling point than water is used together, the speed of drying in fluidized bed granulation may increase. Additionally, because the dispersion or dissolution of the binder may change, the viscosity or flowability of the slurry may be adjusted according to the amount or type of the dispersion medium, thereby improving the production efficiency.

The dispersion medium used to prepare the slurry may be included in such an amount that the solids concentration of the slurry usually ranges from 1 wt% to 50 wt%, or from 5 wt% to 50 wt%, or from 10 wt% to 30 wt%.

The method or order of dispersing or dissolving the silicon-based active material, the linear conductive material and the binder in the dispersion medium is not limited to a particular method or order, and may include, for example, a method that adds the silicon-based active material, the linear conductive material and the binder to the dispersion medium and mixes them, a method that dissolves or disperses the binder in the dispersion medium, and finally, adds the silicon-based active material and the linear conductive material and mixes them.

According to an embodiment of the present disclosure, the slurry may further include other type of negative electrode active material than the silicon-based active material.

Examples of the other type of negative electrode active material may include carbon-based active materials such as non-graphitizing carbon or graphite-based carbon (natural graphite, artificial graphite); metal composite oxides such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Groups 1, 2, and 3 elements in the periodic table, halogen; $0 \leq x \leq 1$; $1 \leq y \leq 3$; $1 \leq z \leq 8$); lithium metals; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ or $Bi_2O_5$; conductive polymers such as polyacetylene; or Li-Co-Ni based materials. According to an embodiment of the present disclosure, the granules may further include at least one type of carbon-based active material of natural graphite or artificial graphite.

In this instance, optionally, the conductive material other than the linear conductive material or other additive may be further added to the dispersion medium.

The mixing means may include, for example, a ball mill, a sand mill, a bead mill, a pigment dispersion machine, a stone mill, an ultrasonic dispersion machine, a homogenizer or a planetary mixer. The mixing is usually performed in a range between room temperature and 80°C for 10 minutes to a few hours.

Subsequently, the slurry is spray-dried to produce the initial granules.

The spray drying method dries the slurry while spraying the slurry in hot air. The spraying method of equipment used in the spray drying method includes a rotary disc method or a pressure nozzle method. The rotary disc method is a method which feeds the slurry into almost the center of the disc that rotates at high speed, urges the slurry to the periphery of the disc by the centrifugal force of the disc, to create mist and dries it. The rotation rate of the disc relies on the size of the disc, but usually ranges from 5,000 rpm to 35,000 rpm, and preferably from 15,000 rpm to 30,000 rpm. Meanwhile, the pressure nozzle method is a method which sprays the slurry through the thin nozzle together with air or a liquid such as a high pressure fluid to convert into mist and dries it.

In an embodiment of the present disclosure, the temperature of the hot air may be controlled to 80°C to 250°C on the basis of the reactor inlet temperature (input) to form the granule structure having a large amount of binder on the surface. In an embodiment of the present disclosure, the temperature of the hot air may be controlled to 175°C to 220°C, or 180°C to 220°C, taking into account the gradient of the amount of the first binder and the aspect ratio. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, or a method of cocurrent flow of sprayed droplets and hot air, fall by gravity and countercurrent contact. Meanwhile, in an embodiment of the present disclosure, in the spray drying, the reactor outlet temperature (the temperature of hot air released from the reactor) may be controlled to 90°C to 130°C.

When the outlet temperature and/or a difference $\triangle T$ between the inlet temperature and the outlet temperature is low, drying is not properly performed, so particles containing a large amount of remaining solvent may be formed, thereby failing to form spherical particles of uniform shape, resulting in agglomeration of granules or amorphous granules. Meanwhile, when the inlet temperature is overly high and $\triangle T$ is large, granulation fails due to overdrying and particles having very small particle size D50 and low aspect ratio may be produced. Accordingly, to control the particle size to the appropriate level together with high degree of sphericity and less binder agglomeration, it is necessary to control the inlet temperature and the outlet temperature within the optimum range.

In addition, heating may be optionally performed to cure the surface of the result obtained by the spray drying, i.e., the granules, and in this instance, the thermal treatment temperature may usually range from 80°C to 300°C.

According to an embodiment of the present disclosure, a span value of the initial granules represented by the following Equation may range from 0.5 to 1.5, or from 0.7 to 1.3.

$$\text{Span} = (D90\text{-}D10)/D50$$

In this instance, D10, D50 and D90 refer to the circle equivalent diameters of the initial granules at 10%, 50% and 90% points of the cumulative number distribution according to the circle equivalent diameter of the initial granules. Here, the circle equivalent diameter (CE diameter) of the initial granules refers to the diameter of a circle having the same area as a two-dimensional image of the initial granules.

The span value of the above Equation is an index indicating the distribution (particle size distribution) with respect to the equivalent circular diameter of the initial granules. That is, the span value indicates how much the percentages of the initial granules having different circle equivalent diameters differ. When the percentages of the initial granules having smaller circle equivalent diameters than the average circle equivalent diameter and the initial granules having larger circle equivalent diameters than the average circle equivalent diameter is high, the span value is higher than 1, and when the initial granules have the same circle equivalent diameter as the average circle equivalent diameter, the span value is 0. That is, as the span value of the above Equation is smaller, the particle size distribution has the narrower width of the circle equivalent diameter distribution of the initial granules.

The initial granules may have an aspect ratio ranging from 0.5 to 1.0. The aspect ratio refers to a ratio of the average major axis length to the average minor axis length of the granules.

In this instance, the average minor axis length indicates the average of lengths in the axial direction having the shortest length of the initial granules, and the average major axis length indicates the average of lengths in the axial direction having the longest length of the initial granules. When the aspect ratio of the initial granules falls within the aforementioned range, advantageously the granules have sufficient fluidity.

The method for manufacturing the negative electrode of the present disclosure using the above-described granules will be described below step by step.

First, the mixture is prepared, including the granules including the silicon-based active material, the linear conductive material and the binder; and the fluorine-containing binder. Optionally, the mixture may further include other necessary additive such as the additional binder, the additional conductive material or the filler.

In this instance, the mixing for preparing the mixture is performed to achieve even distribution of the granules and the fluorine-containing binder, and optionally the additional conductive material or the other necessary additive (filler), and because they are mixed in a powder form, the mixing is not limited to a particular method and may include any method for simply mixing them. However, the negative electrode film of the present disclosure is manufactured by a dry manufacturing method that does not use a dispersion medium, so the mixing may be performed by dry mixing, and may be, for example, performed by feeding the above-described materials into a blender.

In addition, to ensure uniformity, the mixing may be performed in a mixer at 5,000 rpm to 20,000 rpm for 30 seconds to 5 minutes, and specifically at 10,000 rpm to 15,000 rpm for 30 seconds to 3 minutes.

The fluorine-containing binder is not limited to a particular type and may include any fluorine-containing binder that can be microfibrillated by the step of preparing the negative electrode mixture powder. The microfibrillation refers to treatment, causing the polymer to break into smaller pieces, and for example, may be performed using a mechanical shear force. Specific examples of the fibrillatable fluorine-containing binder may include polytetrafluoroethylene (PTFE).

In addition, according to an embodiment of the present disclosure, the negative electrode active material layer may further include, as the additional binder, at least one of a PVdF-based copolymer such as PVdF or PVdF-HFP, or fluororubber such as an FKM-based copolymer.

The additional binder may further include at least one of PVdF-based copolymer such as PVdF or PVdF-HFP; fluororubber such as FKM-based copolymers; or olefin-based polymer such as polyethylene or polypropylene.

The additional conductive material is not limited to a particular type and may include any material having conductivity without causing any chemical change in the corresponding battery, and may include, for example, graphite such as natural graphite or artificial graphite; carbon black such as carbon black, acetylene black, Ketjen black, channel black, furnace black, lamp black or thermal black; activated carbon; conductive fibers such as carbon fibers or metal fibers; fluorocarbon; metal powders such as aluminum powder or nickel powder; conductive whiskers such as zinc oxide whiskers or potassium titanate whiskers; conductive metal oxides such as titanium oxide; or conductive materials such as polyphenylene derivatives.

The filler may play a role in suppressing the expansion of the electrode, and is not limited to a particular type and may include any fibrous material that does not cause any chemical change in the corresponding battery, for example, fibrous materials such as glass fibers or carbon fibers.

The mixing step may be performed by a one-step process of mixing the granules, the fluorine-containing binder, and optionally the additional binder, the additional conductive material or the other necessary additive all at once. The mixing step may be performed by a two-step process of mixing the granules, the additional binder (PVDF or PE), the additional conductive material or the other necessary additive, and then polytetrafluoroethylene as the fluorine-containing binder.

Subsequently, the mixture is kneaded in a range between 70°C and 200°C and under pressure equal to or higher than normal pressure to produce the mixture lump.

In the known technology, high-shear mixing in a jet mill is performed to fibrillate the fluorine-containing binder, but the mixing may raise the problem with finely powdered active material and fiber breakage. To solve these problems, the present disclosure adopts low-shear kneading rather than high-shear mixing.

The kneading is not limited to a specific method. In a specific embodiment of the present disclosure, the kneading may be, for example, performed through a kneader.

The kneading is the step in which the granules, and optionally, the additional conductive material and the other necessary additive are connected and held together by the fibrillation of the fluorine-containing binder to form the mixture lump with the solid content of 100%.

Specifically, the kneading may be controlled to the speed of 10 rpm to 100 rpm. For example, the kneading may be controlled to the speed of 20 rpm or more or 70 rpm or less within the aforementioned range. The kneading may be performed for 1 minute to 30 minutes. For example, the kneading may be performed at the speed of 40 rpm to 70 rpm for 3 minutes to 10 minutes within the aforementioned ranges. Meanwhile, the kneading may be controlled to a shear rate ranging from 10/s to 500/s. In a specific embodiment of the present disclosure, the kneading may be performed for 1 minute to 30 minutes, and the shear rate may be controlled within a range between 30/s and 100/s.

Additionally, the kneading step may be performed under the conditions of high temperature and pressure equal to or higher than normal pressure, and more specifically, pressure higher than normal pressure.

More specifically, the kneading may be performed on the mixture in a range between 70°C and 200°C, and specifically between 90°C and 150°C.

At low temperatures outside of the aforementioned temperature range, fibrillation of the fluorine-containing binder and agglomeration by kneading are inadequate, failing to form a film during calendering. At overly high temperatures, fibrillation of the fluorine-containing binder occurs rapidly and subsequently the already formed fibers may be broken by too high shear force.

In addition, the kneading may be performed under the pressure higher than normal pressure, specifically the pressure of 1 to 100 atmospheric pressure, and more specifically 10 to 80 atmospheric pressure. When the pressure falls within the aforementioned range, it may be possible to prevent the problem with fiber breakage or overly high density of the mixture lump by the application of too high shear force and pressure. That is, according to the present disclosure, instead of high-shear mixing, the low-shear mixing under the conditions of high temperature and pressure equal to or higher than normal pressure may achieve the intended effect of the present disclosure.

Subsequently, the mixture lump is ground to obtain the negative electrode mixture powder.

Specifically, the mixture lump produced through the kneading may be directly calendered, but in this case, it may be necessary to press the mixture lump into a thin film shape, and as a consequence, the density of the film may be overly high or it may fail to obtain the uniform film, and according to the present disclosure, the mixture lump undergoes the grinding step.

In this instance, the grinding step may be performed with a blender or a grinder, but is not limited thereto, and specifically, the grinding step may be performed at the speed of 5,000 rpm to 20,000 rpm for 30 seconds to 5 minutes, and specifically at the speed of 10,000 rpm to 18,000 rpm for 30 seconds to 2 minutes.

When the grinding speed and time are met, sufficient grinding may be done to form a powder of an appropriate size for the formation of a film, and prevent the grinding of the mixture lump into a large amount of fine powder. If necessary, a sieving process may be performed to filter out powder grains that are smaller or larger than a predetermined size.

Subsequently, the negative electrode mixture powder is fed between the plurality of rolls and subjected to calendaring processing to form the negative electrode film.

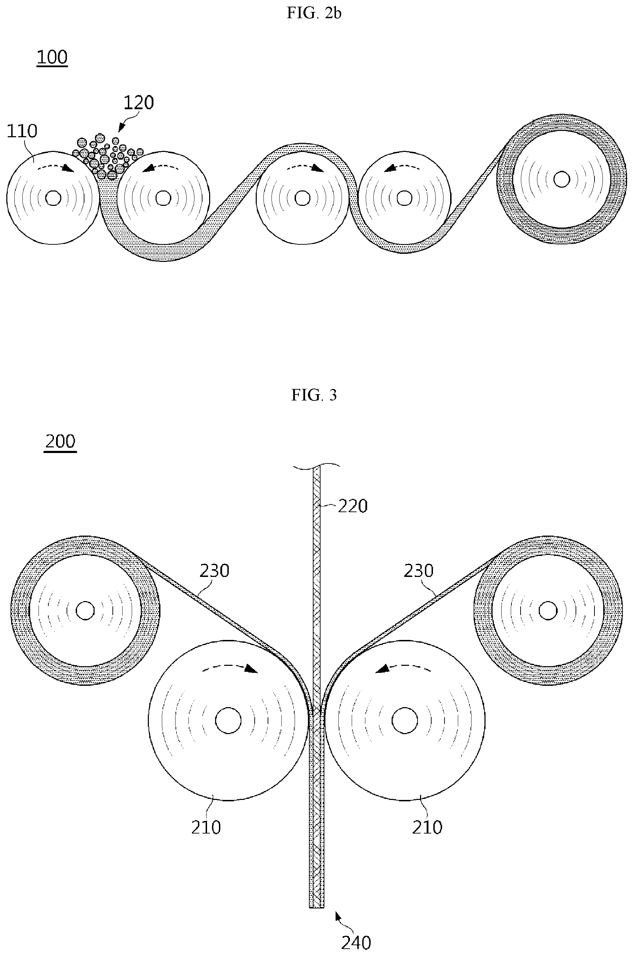

Referring to FIGS. 2a and 2b, a process 100 for forming the electrode film is as follows: feed the electrode mixture powder 120 obtained in the previous step between adjacent rolls of the plurality of rolls 100 spaced apart from each other and rotate the rolls 100 in a direction in which the rolls face each other to compact the mixture powder 120 into a sheet or film shape through a powder sheeting step; followed by calendering multiple times to obtain the electrode film having a final target thickness. FIGS. 2a and 2b show one-time calendaring, and more rolls may be installed to perform the calendaring multiple times.

Specifically, the calendering may be the step of shaping the negative electrode mixture powder into a film, for example, a film having an average thickness of 50 $\mu$m to 300 $\mu$m.

In this instance, the calendaring may be, for example, performed by the rolls positioned in contact, and in this instance, the roll temperature may range from 50°C to 200°C, and the rotational speed ratio of the rolls may be controlled within a range between 1.0 and 3.0.

When the calendering step is completed, the dry negative electrode film acting as the negative electrode layer may be produced. The dry negative electrode film may be also referred to as a free-standing film.

As the as-prepared negative electrode film contains no solvent, the negative electrode film has little or no flowability, making it easy to handle and form into desired shapes, and thus the negative electrode film may be used to manufacture negative electrodes of various shapes. In addition, the process of manufacturing the negative electrode film according to an embodiment of the present disclosure may eliminate the drying process for removing the solvent, thereby significantly improving the manufacturing process efficiency of the negative electrode layer and preventing the problem of the dry electrode such as cracks in the active material or breakage of the fibrillated binder.

Subsequently, the negative electrode film is attached (laminated) to at least one surface of the current collector.

The negative electrode film manufactured in the previous process is attached (laminated) to at least one surface of the current collector.

According to an embodiment of the present disclosure, after the negative electrode film is produced, the negative electrode film in the free-standing film state may undergo the lamination step with the current collector.

Alternatively, according to an embodiment of the present disclosure, in the calendaring process, the lamination roll may be positioned in direct contact with (or spaced a predetermined distance apart from) the end of the roll on which the film is produced, to perform the step of directly laminating the negative electrode film with the current collector without forming a free-standing film. In the latter case involving the step of directly laminating the negative electrode film with the current collector without forming a free-standing film, it may be possible to eliminate the need for auxiliary devices including a predetermined tension control mechanism to smoothly transport the negative electrode film (the free-standing film) made through the calendaring process to the lamination step.

In the method involving performing the lamination step after making the free-standing film as the negative electrode film as described above, the negative electrode film may be tailored to a desired width before attaching it to the current collector.

The lamination step may be the step of rolling and attaching the negative electrode film obtained in the previous step to the current collector to a predetermined thickness. The lamination step may be performed by the lamination roll, and in this instance, the lamination roll may be maintained at the temperature ranging from 25°C to 250°C.

According to an embodiment of the present disclosure, the compression ratio of the negative electrode film in the lamination step may range from 10% to 50%, or from 20% to 50%, or from 30% to 50%.

The compression ratio of the negative electrode film may be defined as the ratio of thickness to which the negative electrode film is compressed at the moment of lamination, and may be represented by the following Equation 1.

[Equation 1]

Compression ratio (%) = $T_p/T_1$ X 100

In Equation 1,

$T_p$ denotes the compressed thickness of the negative electrode film in the lamination step, and
$T_1$ denotes the thickness of the negative electrode film before the lamination step.

When the compression ratio is controlled within the specific range in the lamination step, it may be possible to provide the optimal density and porosity of the negative electrode film and high adhesion strength between the negative electrode film and the current collector.

When the compression ratio of the negative electrode film falls within the range between 10% and 50%, the sufficient pressure applied to the negative electrode film may improve the adhesion strength between the negative electrode film and the current collector, prevent separation of the negative electrode film from the current collector after the lamination process, and prevent the porosity from decreasing below the target porosity due to the increased density of the negative electrode film more than necessary or damage to the current collector.

Additionally, the compaction ratio of the negative electrode film having undergone the lamination step may be in a range of 20% or less, or 18% or less, or 15% or less, or from 5% to 15%, or from 6% to 15%, or from 7% to 15%, or from 9% to 13%.

Here, the compaction ratio may be defined as the ratio of the thickness of the negative electrode film after the lamination step to the thickness of the negative electrode film before the lamination step, and may be represented by Equation 2 below.

[Equation 2]

Compaction ratio (%) = $(T_1-T_2)/T_1$ X 100

In the above Equation 2,

$T_1$ denotes the thickness of the negative electrode film before the lamination step, and
$T_2$ denotes the thickness of the negative electrode film after the lamination step.

When the compaction ratio falls within the aforementioned range, it may be possible to ensure the optimal density and porosity of the negative electrode film and the adhesion strength between the negative electrode film and the current collector.

FIG. 3 is a diagram showing the lamination step of laminating the negative electrode film onto two surfaces of the current collector according to an embodiment of the present disclosure. That is, the lamination step 200 may include rolling and attaching the negative electrode film 230 obtained in the previous step to the current collector 220 to the predetermined thickness using the pair of lamination rolls 210, to finally obtain the negative electrode 240.

According to an aspect of the present disclosure, there are provided an electrochemical device including the above-described negative electrode. The electrochemical device may include any device in which electrochemical reaction occurs, and specifically, the electrochemical device may include, for example, any type of primary battery, secondary battery, fuel cell, solar cell or capacitor such as supercapacitor. In the present disclosure, the electrochemical device may preferably include a secondary battery, and more preferably a lithium-ion secondary battery.

According to another embodiment of the present disclosure, there are provided a secondary battery including an electrode assembly including the above-described negative electrode, a positive electrode and a separator, and a battery case (a cylindrical case, a prismatic case or a pouch) accommodating the electrode assembly together with a lithium-containing non-aqueous electrolyte, and an energy storage system including the same as a unit cell. More preferably, the secondary battery may include a lithium-ion secondary battery.

The positive electrode includes a positive electrode current collector, and a positive electrode active material layer located on the positive electrode current collector and including a positive electrode active material, a positive electrode conductive material and a positive electrode binder, wherein the positive electrode binder is fibrillated to bind the positive electrode active material and the positive electrode conductive material.

The positive electrode of the present disclosure includes the fibrillated binder to bind the positive electrode active material and the positive electrode conductive material in the positive electrode active material layer, and the fibrillated binder less breaks than unfibrillated binders and is able to stretch to a significant degree in the length direction, thereby significantly improving the flexibility of the positive electrode active material layer and the positive electrode including the positive electrode active material layer. The fibrillation process of the binder will be described in a method for manufacturing the positive electrode below.

The positive electrode active material may include any type of lithium transition metal oxide, lithium metal iron phosphate or metal oxide, for example, layered compounds such as lithium cobalt oxide ($LiCoO_2$), lithium nickel oxide ($LiNiO_2$), or compounds with substitution by one or more transition metals; lithium manganese oxide such as $Li_{1+x}Mn_{2-x}O_4$ (x is 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni-site type lithium nickel oxide represented by Chemical Formula $LiNi_{1-x}M_xO_2$ (M = Co, Mn, Al, Cu, Fe, Mg, B or Ga, and x = 0.01 to 0.3); lithium manganese composite oxide represented by Chemical Formula $LiMn_{2-x}M_xO_2$ (M = Co, Ni, Fe, Cr, Zn or Ta, and x = 0.01 to 0.1) or $Li_2Mn_3MO_8$ (M = Fe, Co, Ni, Cu or Zn); $Li_{1+x}(Ni_aCo_bMn_cAl_d)_{1-x}O_2$ (x = 0 to 0.03, a = 0.3 to 0.95, b = 0.01 to 0.35, c = 0.01 to 0.5, d = 0.001 to 0.03, a+b+c+d=1) in which parts of Li in the Chemical Formula are replaced by aluminum ions; lithium metal phosphate $LiMPO_4$ (M = Fe, Co, Ni or Mn), disulfide compounds; or $Fe_2(MoO_4)_3$, but is not limited thereto.

The positive electrode conductive material is not limited to a particular type and may include any material having conductivity without causing any chemical change in the corresponding battery, for example, graphite such as natural graphite or artificial graphite; carbon black such as carbon black, acetylene black, Ketjen black, channel black, furnace black, lamp black or thermal black; conductive fibers such as carbon fibers or metal fibers; fluorocarbon; metal powders such as aluminum powder or nickel powder; conductive whiskers such as zinc oxide whiskers or potassium titanate whiskers; conductive metal oxides such as titanium oxide; conductive materials such as polyphenylene derivatives. Specifically, to evenly mix the conductive material and improve conductivity, the positive electrode conductive material may include at least one selected from the group consisting of activated carbon, graphite, carbon black and carbon nanotubes, and more specifically, activated carbon.

The positive electrode binder may include polyvinylidene fluoride-hexafluoropropylene copolymer (PVDF-co-HFP), polyvinylidene fluoride, polyacrylonitrile, polymethylmethacrylate, polyacrylic acid, polymethacrylic acid, polyvinyl alcohol, carboxymethyl cellulose (CMC), starch, hydroxypropyl cellulose, regenerated cellulose, polyvinyl pyrrolidone, polytetrafluoroethylene (PTFE), polyethylene oxide (PEO), polyethylene, polypropylene, , styrene butadiene rubber (SBR), fluororubber, or two or more of them.

According to an embodiment of the present disclosure, the positive electrode active material may be included in an amount of 85 to 98 parts by weight, the positive electrode conductive material may be included in an amount of 0.5 to 5 parts by weight, and the positive electrode binder may be included in an amount of 0.5 to 10 parts by weight. In addition, the positive electrode active material may be included in an amount of 90 to 98 parts by weight, the positive electrode conductive material may be included in an amount of 0.5 to 5 parts by weight, and the positive electrode binder may be included in an amount of 0.5 to 5 parts by weight.

The separator may include a porous polymer film commonly used as the separator, for example, a porous polymer film made of polyolefin-based polymer such as an ethylene homopolymer, a propylene homopolymer, an ethylene/butene copolymer, an ethylene/hexene copolymer or an ethylene/methacrylate copolymer, used alone or in stack. In addition, an insulating thin film having high ionic permeability and mechanical strength may be used. The separator may include a safety reinforced separator (SRS) having a thin ceramic coating on the surface of the separator. In addition, the separator may include a porous nonwoven fabric, for example, a nonwoven fabric made of high-melting-point glass fibers or polyethylene terephthalate fibers, but is not limited thereto.

The electrolyte solution includes a lithium salt as an electrolyte and an organic solvent for dissolving the lithium salt.

The lithium salt is not limited to a particular type and may include any lithium salt commonly used in the electrolyte solution for the secondary battery, and for example, the anion of the lithium salt may include any one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The organic solvent included in the electrolyte solution is not limited to a particular type and may include any organic solvent commonly used in the art. Typically, the organic solvent may include at least one selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite and tetrahydrofuran.

In particular, among these carbonate-based organic solvents, preferably, cyclic carbonate such as ethylene carbonate and propylene carbonate is a high-viscosity organic solvent that has high dielectric constant and easily dissociates the lithium salt in the electrolyte, and more preferably, when the cyclic carbonate is used in combination with low-viscosity, low-dielectric constant linear carbonate such as dimethyl carbonate and diethyl carbonate at an optimal ratio, the electrolyte solution having high electrical conductivity may be prepared.

Optionally, the electrolyte solution that is stored according to the present disclosure may further include an additive such as an overcharging preventive agent commonly used in the electrolyte solution.

The lithium secondary battery according to an embodiment of the present disclosure may be manufactured by placing the positive electrode and the negative electrode with the separator interposed between them to form the electrode assembly, placing the electrode assembly in, for example, the pouch, the cylindrical battery case, or the prismatic battery case, and injecting the electrolyte. Alternatively, the lithium secondary battery may be manufactured by stacking the electrode assembly, filling it with the electrolyte solution, and placing the obtained resulting product in the battery case and sealing.

In this instance, the detailed structure of the secondary battery and the energy storage system is well-known in the art, and its description is omitted.

Hereinafter, examples will be described in detail to particularly describe the present disclosure. However, the examples according to the present disclosure may be modified in many other forms, and the scope of the present disclosure should not be interpreted as being limited to the following examples. The examples of the present disclosure are provided to explain the present disclosure to those skilled in the art thoroughly and completely.

[Example 1]

(1) Production of granules

SiO (average particle size D50: 17 $\mu$m) as a silicon-based active material, single-walled carbon nanotubes (SWCNT) as a linear conductive material, a dispersant (polyvinylpyrrolidone (PVP), K90 grade)) for SWCNT, styrene-butadiene rubber (SBR, a SBR copolymer including styrene and butadiene, LG Chem) and an acrylamide-acrylate copolymer (acrylamide (AM):acrylic acid (AA):acrylonitrile (AN) = molar ratio 60:30:10) as a binder (a binder for granules), and carboxymethyl cellulose (CMC, Daicel2200) as a dispersant were mixed with water as a dispersion medium at a weight ratio of 91:1.6:2.4:2:2:1 through a homogenizer to prepare a composition having viscosity at about 9000 cPs level. In this instance, the solid content in the composition was 26.4 wt%.

In this instance, the single-wall carbon nanotubes (SWCNT) were added in a dispersion form, and the dispersion contained the single-wall carbon nanotubes (SWCNT), the dispersant for SWCNT and the water as the dispersion medium.

The as-prepared composition was fed into a spray dryer together with hot air in the pressure range condition of -40 mmH$_2$O to dry it. In this instance, the conditions of the spray dryer were controlled to the inlet temperature of 250°C, the outlet temperature of 105°C, the pressure of the two fluid nozzles of the spray dryer of 2.5 bar, and the feed rate of the spray dryer of 10 cc/min.

Large particles of 150 $\mu$m or more were removed from half of the dried product using an industrial sieve to finally obtain granules. The D90 of the obtained granules was 35 $\mu$m.

The granules had a central portion including the plurality of silicon-based active materials and the linear conductive material, and a surface portion located at the outside of the central portion and including the binder (the binder for granules) binding the plurality of silicon-based active materials and the linear conductive material.

(2) Manufacture of electrode (negative electrode)

Artificial graphite and natural graphite as a carbon-based active material, the obtained granules, carbon black (C65) as a conductive material for an electrode layer, and polyethylene (PE), polyvinylidene fluoride (PVDF) and polytetrafluoroethylene (PTFE) as a binder for an electrode layer were fed into a blender at a weight ratio of 46.5:46.5:3.2:1.0:0.3:2.0:0.5 and mixed at 10,000 rpm for 1 minute to prepare a mixture.

In this instance, the mixing step was performed by a two-step process of mixing the artificial graphite, the natural graphite, the obtained granules, the conductive material for the electrode layer, the polyethylene and the polyvinylidene fluoride, and then adding polytetrafluoroethylene and mixing together.

Subsequently, the temperature of a kneader was stabilized at 140°C, and the as-prepared mixture was fed into the kneader which in turn, operated at the speed of 10 rpm for 20 minutes under the cover pressure of 50 atmospheric pressure to obtain a mixture lump. The mixture lump was fed into a blender to grind at 10,000 rpm for 30 seconds, and passed through a sieve with openings of 1 mm in size to obtain an electrode mixture powder. Subsequently, the as-prepared electrode mixture powder was fed into a lab calender (roll diameter: 88 mm, roll temperature: 130°C) to produce a negative electrode film. Two sheets of negative electrode film were each placed on each of two surfaces of a copper foil (thickness: 12 $\mu$m) coated with a conductive primer layer including carbon black and an acrylic binder at a weight ratio of 5:5, and laminated through a compression roll maintained at 130°C to manufacture a negative electrode.

In this instance, in the lamination step, the compression ratio of the negative electrode film was 35.6%, and the compaction ratio of the negative electrode film was 16.4%.

In this instance, the compression ratio of the negative electrode film is defined as the ratio of the thickness to which the negative electrode film is compressed at the moment of lamination, and is calculated by the following Equation 1.

[Equation 1]

$$\text{Compression ratio (\%)} = T_p/T_1 \times 100$$

In Equation 1,

$T_p$ denotes the compressed thickness of the negative electrode film in the lamination step, and
$T_1$ denotes the thickness of the negative electrode film before the lamination step.

In addition, the compaction ratio of the negative electrode film is defined as the ratio of the thickness of the negative electrode film after the lamination step to the thickness of the negative electrode film before the lamination step, and is calculated by the following Equation 2.

[Equation 2]

$$\text{Compaction ratio (\%)} = ((T_1 - T_2)/T_1 \times 100$$

In the above Equation 2,

$T_1$ denotes the thickness of the negative electrode film before the lamination step, and
$T_2$ denotes the thickness of the negative electrode film after the lamination step.

The total thickness of the finally manufactured negative electrode was 175 μm, the thickness of the negative electrode active material layer was 81.5 μm, and the porosity of the negative electrode was 25.1%.
In this instance, the porosity of the negative electrode was calculated by the following Relation equation using the apparent density of the negative electrode active material layer obtained by subtracting the volume and weight of the current collector from the volume and weight of the negative electrode, and the actual density calculated based on the actual density and composition of each component.

$$\text{Porosity (\%)} = \{1 - (\text{Apparent Density/Actual Density})\} \times 100$$

The increase in apparent density of the negative electrode film before and after lamination with the current collector was 19%.
In this instance, the increase in apparent density of the negative electrode film before and after lamination with the current collector was calculated by the following Equation 4, and the apparent density of the negative electrode film before and after lamination with the current collector was calculated by measuring the weight and thickness of the negative electrode film before lamination, measuring the weight and thickness of the negative electrode after lamination, subtracting the weight and thickness of the current collector from the weight and thickness of the negative electrode to obtain the weight and thickness of the film.

[Equation 4]

$$\text{Increase in apparent density (\%)} = (D_2 - D_1)/D_1 \times 100$$

$D_1$ denotes the apparent density (g/cm$^3$) of the negative electrode film before the lamination step, and
$D_2$ denotes the apparent density (g/cm$^3$) of the negative electrode film after the lamination step.

(3) Manufacture of positive electrode

Li[Ni$_{0.88}$Co$_{0.07}$Mn$_{0.04}$]Al$_{0.01}$O$_2$ as a positive electrode active material, a pre-dispersion of carbon black as a positive electrode conductive material and polyvinylidene fluoride (PVdF) as a binder for positive electrode powder were added to NMP as a dispersion medium at a weight ratio of 96.5:1.5:2, and the mixture was stirred using a homogenizer at 3500 rpm for 1 hour to prepare a positive electrode active material slurry. The solid content in the carbon black pre-dispersion was 16%, and the final solid content in the slurry was 68%. The slurry was coated on two surfaces of a 12 $\mu$m-thick aluminum current collector, and the coated slurry was dried using a dryer equipped with a hot air blower and an IR heater to form a positive electrode active material layer.

Subsequently, the positive electrode active material layer was rolled by a roll pressing method to manufacture a positive electrode having a positive electrode active material layer having a loading amount of 590 mg/25 cm$^2$ per unit area after drying.

(4) Manufacture of secondary battery

The as-prepared positive and negative electrodes were placed with a porous polyethylene film (thickness: 10 $\mu$m) as a separator between them to make an electrode assembly, and the electrode assembly was placed in a pouch-type battery case, followed by injection of a liquid electrolyte in which 1 M LiPF$_6$ was dissolved in a solvent in which ethylene carbonate and ethyl methyl carbonate were mixed at 1:4 (volume ratio), sealing and formation/activation to manufacture a pouch-type secondary battery cell.

[Example 2]

(1) Production of granules

Granules were obtained by the same method as Example 1, except that SiO (average particle size D50: 17 $\mu$m) as a silicon-based active material, single-walled carbon nanotubes (SWCNT) as a linear conductive material, a dispersant (polyvinylpyrrolidone (PVP), K90 grade) for SWCNT, an acrylamide-acrylate copolymer (acrylamide (AM) : acrylic acid (AA): acrylonitrile (AN) = molar ratio 60:30:10) as a binder (a binder for granules), and carboxymethyl cellulose (CMC, Daicel2200) as a dispersant were mixed with water as a dispersion medium at a weight ratio of 91:1.6:2.4:4:1 through a homogenizer to prepare a composition having viscosity at about 9000 cPs level and in this instance, the solid content in the composition was 25.7 wt%. The D90 of the obtained granules was 34 $\mu$m.

(2) A negative electrode, a positive electrode and a secondary battery were manufactured by the same method as Example 1, except that the granules obtained in Example 2 were used.

[Example 3]

(1) Production of granules

Granules were obtained by the same method as Example 1, except that an active material (artificial graphite : silicon-based active material SiO (average particle size D50: 17 $\mu$m) = weight ratio 50:50), single-walled carbon nanotubes (SWCNT) as a linear conductive material, a dispersant (polyvinylpyrrolidone (PVP), K90 grade) for SWCNT, styrene-butadiene rubber (SBR, a SBR copolymer including styrene and butadiene, LG Chem) and an acrylamide-acrylate copolymer (acrylamide (AM): acrylic acid (AA): acrylonitrile (AN) = molar ratio 60:30:10) as a binder (a binder for granules), and carboxymethyl cellulose (CMC, Daicel2200) as dispersant were mixed with water as a dispersion medium at a weight ratio of 97.9:0.3:0.45:0.5:0.5:0.35 through a homogenizer to prepare a composition having viscosity at about 9000 cPs level, and in this instance, the solid content in the composition was 50 wt%. The D90 of the obtained granules was 35 $\mu$m.

(2) A negative electrode, a positive electrode and a secondary battery were manufactured by the same method as Example 1, except that the granules obtained in Example 3 were used.

[Example 4]

(1) Production of granules

Granules were obtained by the same method as Example 1, except that a Si/C composite (20 parts by weight of Si loaded into 100 parts by weight of an amorphous carbon support, average particle size D50: 16 $\mu$m) as a silicon-based active material, single-walled carbon nanotubes (SWCNT) as a linear conductive material, a dispersant (polyvinylpyrrolidone (PVP), K90 grade) for SWCNT, styrene-butadiene rubber (SBR, a SBR copolymer including styrene and butadiene, LG Chem) and an acrylamide-acrylate copolymer (acrylamide (AM) : acrylic acid (AA): acrylonitrile (AN) = molar ratio 60:30:10) as a binder (a binder for granules) and carboxymethyl cellulose (CMC, Daicel2200) as a dispersant were mixed with water as a dispersion medium at a weight ratio of 93:1.6:2.4: 1:1:1 through a homogenizer to prepare a composition having viscosity at about 9000 cPs level, and in this instance, the solid content in the composition was 25.7 wt%. The D90 of the obtained granules was 34 $\mu$m.

(2) A negative electrode, a positive electrode and a secondary battery were manufactured by the same method as Example 1, except that the granules obtained in Example 4 were used.

[Comparative Example 1]

(1) Manufacture of electrode (negative electrode)

Artificial graphite and natural graphite as a carbon-based active material, a silicon-based active material (SiO (average particle size (D50): 17 μm), carbon black (C65) as a conductive material for an electrode layer, and polyethylene (PE), polyvinylidene fluoride (PVDF) and polytetrafluoroethylene (PTFE) as a binder for an electrode layer were fed into a blender at a weight ratio of 46.66:46.66:2.89:1.0:0.3:2.0:0.5 and mixed at 10,000 rpm for 1 minute to prepare a mixture.
In this instance, the mixing step was performed by a two-step process of mixing the artificial graphite, the natural graphite, the silicon-based active material, the conductive material for the electrode layer, the polyethylene and the polyvinylidene fluoride, and then adding the polytetrafluoroethylene and mixing together.
Subsequently, the temperature of a kneader was stabilized at 150°C, and the as-prepared mixture was fed into the kneader which in turn, operated at the speed of 10 rpm under the cover pressure of 50 atmospheric pressure for 20 minutes to obtain a mixture lump. The mixture lump was fed into a blender to grind at 10,000 rpm for 30 seconds, and passed through a sieve with openings of 1 mm in size to obtain an electrode mixture powder. Subsequently, the as-prepared mixture powder was fed into a lab calender (roll diameter: 88 mm, roll temperature: 130°C) to produce a negative electrode film. Two sheets of the negative electrode film were each placed on each of two surfaces of a copper foil (12 μm) coated with a conductive primer layer including carbon black and an acrylic binder at a weight ratio of 5:6, and laminated through a compression roll maintained at 130°C to manufacture a negative electrode.
In this instance, in the lamination step, the compression ratio of the negative electrode film was 35.6%, and the compaction ratio of the negative electrode film was 16.4%.
A positive electrode and a secondary battery were manufactured by the same method as Example 1, except that the negative electrode manufactured in Comparative Example 1 was used.

Performance evaluation

Resistance

Resistance (Ω), to be specific, Rohm (ohmic resistance) (0.1s) and Rdiff (diffusion resistance) (30s) was measured for each component of each of the secondary batteries manufactured in Examples 1 to 4 and Comparative Example 1, and TABLE 1 below summarizes the results (conditions SOC 50, 25°C, in this instance, the smaller resistance, the better).
Specifically, the resistance measurement for each component was done through electrochemical impedance spectroscopy (EIS) that separates the resistance of each component of the secondary battery by applying small alternating current signals of different frequencies to the battery cell to measure impedance. Because EIS experiments are sensitive to temperature, the experiment was conducted in a 25°C chamber similar to room temperature in order to minimize errors.

Life characteristics (capacity retention after 100 cycles)

Each of the secondary batteries manufactured in Examples 1 to 4 and Comparative Example 1 was charged at a constant current and constant voltage of 0.33C to 4.2 V at 25°C with a cut-off of 0.5%. Subsequently, they were discharged at a constant current of 0.33C to 2.5 V. This single charge and discharge cycle was repeated 100 times. In this instance, the capacity retention was calculated by the following Equation.

Capacity retention = [(capacity in 100th cycle) / (capacity in 1st cycle (initial capacity))] X 100

TABLE 1 summarizes the evaluation results.

[TABLE 1]

| | Rohm (ohm resistance) (0.1s)(Ω) | Rdiff (diffusion resistance) (30s) (Ω) | Capacity retention after 100 cycles (%) |
|---|---|---|---|
| Example 1 | 0.62 | 1.543 | 89.8 |

(continued)

|  | Rohm (ohm resistance) (0.1s)($\Omega$) | Rdiff (diffusion resistance) (30s) ($\Omega$) | Capacity retention after 100 cycles (%) |
|---|---|---|---|
| Example 2 | 0.695 | 1.7 | 89.2 |
| Example 3 | 0.475 | 1.499 | 89.5 |
| Example 4 | 0.527 | 1.344 | 89.0 |
| Comparative Example 1 | 0.48 | 1.2 | 87.0 |

Referring to TABLE 1, it was confirmed that the secondary batteries of Examples 1 to 4 showed similar or slightly higher Ohm resistance and diffusion resistance than the secondary battery of Comparative Example 1, but the capacity retention after 100 cycles was significantly improved. It may be thought that this difference comes from the electrode manufacturing method and whether or not the linear conductive material is dispersed. In Examples 1 to 4, the granules including the silicon-based active material and the linear conductive material were prepared beforehand and mixed with the fluorine-containing binder to form the negative electrode active material layer, while in Comparative Example 1, without preparing the granules beforehand, the silicon-based active material was dry-mixed with the fluorine-containing binder to form the negative electrode active material layer.

In the case of Comparative Example 1, there is an uneven dispersion problem of the linear conductive material in the negative electrode active material layer due to the structural feature of the linear conductive material. Because the linear conductive material has a long and thin fiber shape, the dry mixing method cannot achieve even dispersion of the linear conductive material, thereby failing to form a uniform conductive network. Accordingly, in Comparative Example 1, the linear conductive material was not added, and there is a high likelihood of uneven conduction pathways in the negative electrode active material layer. In contrast, in Examples 1 to 4, the linear conductive material was prepared beforehand in a granular form together with the silicon-based active material, to form the negative electrode active material layer with even dispersion of the linear conductive material, thereby forming a structure with electrical connectivity and lithium ion diffusivity.

The granules used in Examples 1 to 4 are not a simple mixture, but include the binder that plays a role in connecting and holding the silicon-based active material and the linear conductive material together. Due to this structural feature, the linear conductive material may be evenly distributed on the surface of the silicon-based active material within the granules, and as the binder played a role in holding them together, a more stable conductive network was formed in the negative electrode active material layer. However, because the binder in the granules is a non-conductive material, a slight increase in resistance was found in Examples 1 to 4. However, as the linear conductive material is evenly dispersed in the granules to form a conductive network, electrical conductivity was maintained at or above a predetermined level throughout the electrode layer, and accordingly, although the internal resistance of the electrode increases to some extent, it may be possible to improve diffusion of lithium ions and movement of electrons, thereby contributing to the improved electrochemical performance.

In addition, the silicon-based active material shrinks and expands to a great extent during charging/discharging, and a volume change amounting to about 300% has a significant effect on the electrode structure. In the case of Comparative Example 1, as the granules were not used, there was a lack of a structural mechanism for suppressing the volume expansion of the silicon-based active material, and as a result, each of silicon-based active material particles shrank and expanded during charging/discharging, resulting in unstable electrode structure, and eventually causing fast degradation of cycling characteristics. In contrast, in Examples 1 to 4, the binder in the granules played a role in connecting and holding the silicon-based active material and the linear conductive material together, thereby effectively reducing the volume expansion of the silicon-based active material, and forming a flexible conductive network throughout the electrode layer with even dispersion of the linear conductive material, so the electrode structure was maintained more stably. Due to these features, Examples 1 to 4 had high capacity retention after 100 charge and discharge cycles and improved mechanical stability of the electrode during charging/discharging.

## Claims

1. A negative electrode comprising:

   a current collector and a negative electrode active material layer located on at least one surface of the current collector,
   wherein the negative electrode active material layer includes granules including a silicon-based active material, a linear conductive material and a binder; and a fibrillated fluorine-containing binder connecting and holding the granules together.

2. The negative electrode according to claim 1,
wherein the silicon-based active material includes silicon (Si), silicon oxide (SiOx, 0<x≤2), a Si/C composite, or two or more of them.

3. The negative electrode according to claim 1,
wherein the linear conductive material includes single-walled carbon nanotubes (SWCNT), multi-walled carbon nanotubes (MWCNT), carbon nanofibers, or two or more of them.

4. The negative electrode according to claim 1,
wherein the binder includes at least one of a linear binder and a dot-type binder.

5. The negative electrode according to claim 4,
wherein the binder includes the linear binder and the dot-type binder.

6. The negative electrode according to claim 4,
wherein the linear binder includes an acrylate-based polymer, and the dot-type binder includes a diene-based polymer, a styrene-based polymer, or two or more of them.

7. The negative electrode according to claim 1,
wherein the granules have a central portion including the silicon-based active material and the linear conductive material; and a surface portion located at all or part of an outside of the central portion, the surface portion including the binder binding the silicon-based active material and the linear conductive material.

8. The negative electrode according to claim 7,

wherein the binder is included in a larger amount (wt%) at the surface portion of the granules than the central portion based on a total weight 100 wt% of the silicon-based active material, the linear conductive material and the binder, and
wherein the surface portion is a region near a surface of the granules to a predetermined depth in a direction from the surface of the granules toward a center of the granules, and the central portion is a region other than the surface portion.

9. The negative electrode according to claim 1,
wherein the granules include 80 to 98 parts by weight of the silicon-based active material, 0.2 to 10 parts by weight of the linear conductive material, and 0.5 to 10 parts by weight of the binder.

10. The negative electrode according to claim 1,
wherein the granules further include a carbon-based active material.

11. The negative electrode according to claim 1,
wherein the fluorine-containing binder includes polytetrafluoroethylene (PTFE).

12. The negative electrode according to claim 1,
wherein the negative electrode active material layer includes 5 to 30 parts by weight of the fluorine-containing binder based on 100 parts by weight of the granules.

13. The negative electrode according to claim 1,

wherein a primer layer is present on all or part of the at least one surface of the current collector,
wherein the primer layer includes a primer layer binder and a primer layer conductive material, and
wherein a sum of amounts of the primer layer binder and the primer layer conductive material is equal to or larger than 90 wt% of a total weight of the primer layer.

14. A method for manufacturing the negative electrode of claim 1, comprising:

preparing a mixture including the granules including the silicon-based active material, the linear conductive material and the dot-type binder; and the fluorine-containing binder;

kneading the mixture in a range between 70°C and 200°C and under a pressure equal to or higher than normal pressure to produce a mixture lump;

grinding the mixture lump to obtain a negative electrode mixture powder;

feeding the negative electrode mixture powder between a plurality of rolls to perform a calendaring process to form a negative electrode film; and

attaching the negative electrode film to at least one surface of the current collector.

15. The method for manufacturing the negative electrode according to claim 14,
wherein the granules are produced by mixing the silicon-based active material, the linear conductive material and the binder with a dispersion medium to prepare a slurry; and spray-drying the slurry.

16. An electrochemical device comprising the negative electrode according to any one of claims 1 to 13.

17. The electrochemical device according to claim 16,
wherein the electrochemical device is a secondary battery.

FIG. 1

FIG. 2a

FIG. 2b

<u>100</u>

FIG. 3

<u>200</u>

## INTERNATIONAL SEARCH REPORT

| International application No. |
| --- |
| **PCT/KR2025/001611** |

| A. | CLASSIFICATION OF SUBJECT MATTER |
| --- | --- |

**H01M 4/134**(2010.01)i; **H01M 4/38**(2006.01)i; **H01M 4/62**(2006.01)i; **H01M 4/1395**(2010.01)i; **H01M 4/04**(2006.01)i; **H01M 4/587**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/134(2010.01); H01M 10/052(2010.01); H01M 10/42(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지 (secondary battery), 음극 (anode), 규소 (silicon, Si), 도전재 (conductive material), 바인더 (binder), 섬유화, 과립체 (granule), 폴리테트라플루오로에틸렌 (polytetrafluoroethylene, PTFE)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0116738 A (LG ENERGY SOLUTION, LTD.) 04 August 2023 (2023-08-04) See claims 1, 2 and 7; and paragraphs [0013], [0025], [0033], [0035], [0038]-[0040], [0054], [0080], [0083], [0092], [0108]-[0110], [0121], [0124] and [0177]. | 1-17 |
| Y | KR 10-2023-0049012 A (LG ENERGY SOLUTION, LTD.) 12 April 2023 (2023-04-12) See claim 1; and paragraphs [0009], [0049]-[0053], [0082], [0094], [0096], [0098], [0105] and [0115]. | 1-17 |
| A | KR 10-2016-0023665 A (ZEON CORPORATION et al.) 03 March 2016 (2016-03-03) See abstract; and claims 1-6. | 1-17 |
| A | KR 10-2020-0017218 A (LG CHEM, LTD.) 18 February 2020 (2020-02-18) See abstract; and claims 1-8. | 1-17 |
| A | KR 10-2023-0064383 A (LG ELECTRONICS INC.) 10 May 2023 (2023-05-10) See abstract; and claims 1-16. | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 May 2025** | **05 May 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2025/001611** |

| Patent document cited in search report | | | Publication date (day/month/year) | Patent family member(s) | | | Publication date (day/month/year) |
|---|---|---|---|---|---|---|---|
| KR | 10-2023-0116738 | A | 04 August 2023 | CN | 118476067 | A | 09 August 2024 |
| | | | | EP | 4456202 | A1 | 30 October 2024 |
| | | | | JP | 2025-502839 | A | 28 January 2025 |
| | | | | US | 2025-0118767 | A1 | 10 April 2025 |
| | | | | WO | 2023-146378 | A1 | 03 August 2023 |
| KR | 10-2023-0049012 | A | 12 April 2023 | CN | 105247708 | B | 22 September 2017 |
| | | | | CN | 117916905 | A | 19 April 2024 |
| | | | | EP | 4391102 | A1 | 26 June 2024 |
| | | | | JP | 2024-533404 | A | 12 September 2024 |
| | | | | JP | 6170149 | B2 | 26 July 2017 |
| | | | | KR | 10-2023-0049039 | A | 12 April 2023 |
| | | | | KR | 10-2024-0024156 | A | 23 February 2024 |
| | | | | KR | 10-2637754 | B1 | 16 February 2024 |
| | | | | WO | 2023-059039 | A1 | 13 April 2023 |
| KR | 10-2016-0023665 | A | 03 March 2016 | CN | 105247708 | A | 13 January 2016 |
| | | | | CN | 105247708 | B | 22 September 2017 |
| | | | | JP | 6170149 | B2 | 26 July 2017 |
| | | | | KR | 10-2021-0083392 | A | 06 July 2021 |
| | | | | KR | 10-2367259 | B1 | 23 February 2022 |
| | | | | US | 10283808 | B2 | 07 May 2019 |
| | | | | US | 2016-0141715 | A1 | 19 May 2016 |
| | | | | US | 2018-0183092 | A2 | 28 June 2018 |
| | | | | WO | 2014-208684 | A1 | 31 December 2014 |
| KR | 10-2020-0017218 | A | 18 February 2020 | CN | 112470310 | A | 09 March 2021 |
| | | | | CN | 112470310 | B | 01 October 2024 |
| | | | | CN | 118919649 | A | 08 November 2024 |
| | | | | EP | 3826088 | A1 | 26 May 2021 |
| | | | | EP | 3826088 | A4 | 24 November 2021 |
| | | | | EP | 3826088 | B1 | 06 November 2024 |
| | | | | EP | 4447139 | A2 | 16 October 2024 |
| | | | | EP | 4447139 | A3 | 06 November 2024 |
| | | | | ES | 2996935 | T3 | 13 February 2025 |
| | | | | HU | E069228 | T2 | 28 February 2025 |
| | | | | JP | 2021-532542 | A | 25 November 2021 |
| | | | | JP | 7110481 | B2 | 01 August 2022 |
| | | | | KR | 10-2364463 | B1 | 16 February 2022 |
| | | | | PL | 3826088 | T3 | 17 February 2025 |
| | | | | US | 12002961 | B2 | 04 June 2024 |
| | | | | US | 2021-0344014 | A1 | 04 November 2021 |
| | | | | US | 2024-0274824 | A1 | 15 August 2024 |
| | | | | WO | 2020-032471 | A1 | 13 February 2020 |
| KR | 10-2023-0064383 | A | 10 May 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240015221